(19) Europäisches Patentamt
European Patent Office
Office européen des brevets

(11) **EP 4 429 179 A1**

(12) **EUROPEAN PATENT APPLICATION**
published in accordance with Art. 153(4) EPC

(43) Date of publication:
**11.09.2024 Bulletin 2024/37**

(21) Application number: **22890389.4**

(22) Date of filing: **03.11.2022**

(51) International Patent Classification (IPC):
**H04L 25/02** $^{(2006.01)}$      **H04L 5/00** $^{(2006.01)}$
**H04L 1/00** $^{(2006.01)}$

(52) Cooperative Patent Classification (CPC):
**H04L 1/00; H04L 5/00; H04L 25/02**

(86) International application number:
**PCT/KR2022/017093**

(87) International publication number:
**WO 2023/080658 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2021 KR 20210151254**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KANG, Jiwon**
  **Seoul 06772 (KR)**
• **KIM, Kyuseok**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING PHYSICAL CHANNEL IN WIRELESS COMMUNICATION SYSTEM**

(57)     Disclosed are a method and device for transmitting and receiving a physical channel in a wireless communication system. A method for receiving a physical downlink shared channel (PDSCH) according to one embodiment of the present disclosure may comprise the steps of: receiving configuration information relating to a plurality of training reference signals for training an artificial intelligence/machine learning (AI/ML) model from a base station; receiving the plurality of training reference signals from the base station; receiving control information for scheduling the PDSCH from the base station; and receiving the PDSCH from the base station on the basis of an inference derived with respect to a demodulation reference signal (DMRS) of the PDSCH from the AI/ML model which has been trained by means of one or more training reference signals from among the plurality of training reference signals.

FIG.34

EP 4 429 179 A1

**Description**

[Technical Field]

The present disclosure relates to a wireless communication system, and in more detail, relates to a method and an apparatus of transmitting and receiving a physical channel/signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving a physical channel (e.g., PDSCH(physical downlink shared channel), PUSCH(physical uplink shared channel), PDCCH(physical downlink control channel), PUCCH(physical uplink control channel), PBCH(physical broadcast channel), PRACH(physical random access channel), etc.)/ physical signal (e.g., channel state information reference signal, sounding reference signal, phase tracking reference signal, demodulation reference signal, tracking reference signal, etc.).

In addition, an additional technical object of the present disclosure is to provide a method and an apparatus for transmitting and receiving a physical channel/signal using an inference result of an artificial intelligence (AI)/machine learning (ML) model.

In addition, an additional technical object of the present disclosure is to provide a method and an apparatus for configuring/indicating a correspondence relationship between a physical channel/signal for AI/ML model training and a physical channel/signal for AI/ML inference.

The technical objects to be achieved by the present disclosure are not limited to the above-described technical objects, and other technical objects which are not described herein will be clearly understood by those skilled in the pertinent art from the following description.

[Technical Solution]

A method of receiving a PDSCH (physical downlink shared channel) in a wireless communication system according to an aspect of the present disclosure may include: receiving, from a base station, configuration information related to a plurality of training reference signals for training of an artificial intelligence (AI)/machine learning (ML) model; receiving, from the base station, the plurality of training reference signals; receiving, from the base station, control information for scheduling the PDSCH; and receiving, from the base station, the PDSCH based on an inference derived for a demodulation reference signal (DMRS) of the PDSCH from an AI/ML model trained using one or more training reference signals among the plurality of training reference signals. The configuration information or the control information may include information on the one or more training reference signals corresponding to the DMRS.

A method of receiving a PUSCH (physical uplink shared channel) according to an additional aspect of the present disclosure may include: transmitting, to a terminal, configuration information related to a plurality of training reference signals for training of an artificial intelligence (AI)/machine learning (ML) model; receiving, from the terminal, the plurality of training reference signals; transmitting, to the terminal, control information for scheduling the PUSCH; and receiving, from the terminal, the PUSCH based on an inference derived for a demodulation reference signal (DMRS) of the PUSCH from an AI/ML model trained using one or more training reference signals among the plurality of training reference signals. The configuration information or the control information may include information on the one or more training reference signals corresponding to the DMRS.

[Technical Effects]

According to an embodiment of the present disclosure, training of an AI/ML model can be performed for each specific physical channel/signal for training, and the learning results can be stored/organized/managed/used/applied separately/independently.

In addition, according to an embodiment of the present disclosure, by configuring/indicating/defining a physical channel/signal for training that corresponds to a specific physical channel/signal for inference, the results learned in advance can be appropriately used/applied to specific physical channels/signals for inference.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a classification of artificial intelligence.
FIG. 8 illustrates a feed-forward neural network.
FIG. 9 illustrates a recurrent neural network.
FIG. 10 illustrates a convolutional neural network.
FIG. 11 illustrates an auto encoder.
FIG. 12 illustrates a functional framework for an AI operation.
FIG. 13 is a diagram illustrating split AI inference.
FIG. 14 illustrates an application of a functional framework in a wireless communication system.
FIG. 15 illustrates an application of a functional framework in a wireless communication system.
FIG. 16 illustrates an application of a functional framework in a wireless communication system.
FIG. 17 illustrates a 1D CNN structure for AI/ML-based channel estimation in a wireless communication system to which the present disclosure may be applied.
FIG. 18 illustrates an output value estimation method in a 1D CNN structure for AI/ML-based channel estimation in a wireless communication system to which the present disclosure can be applied.
FIG. 19 illustrates a 2D CNN structure for AI/ML-based channel estimation in a wireless communication system to which the present disclosure may be applied.
FIG. 20 illustrates an output value estimation method in a 2D CNN structure for AI/ML-based channel estimation in a wireless communication system to which the present disclosure may be applied.
FIG. 21 illustrates padding and pooling in a CNN structure for AI/ML-based channel estimation in a wireless communication system to which the present disclosure may be applied.
FIG. 22 is a diagram illustrating a signaling procedure between a base station and a terminal according to an embodiment of the present disclosure.
FIG. 23 is a diagram for explaining a method of transmitting and receiving DMRS without data, according to an embodiment of the present disclosure.
FIG. 24 is a diagram illustrating a signaling procedure between a base station and a terminal for a method of transmitting and receiving T (training)-DMRS, according to an embodiment of the present disclosure.
FIG. 25 is a diagram for explaining a method for determining a DMRS pattern according to an embodiment of the present disclosure.
FIG. 26 is a diagram for explaining a method of transmitting and receiving a DMRS in a time domain or frequency domain, according to an embodiment of the present disclosure.
FIG. 27 illustrates signaling for configuring/indicating/defining a correspondence between a signal/channel for training of an AI/ML model and a signal/channel for inference according to an embodiment of the present disclosure.

FIG. 28 illustrates a method of configuring/indicating/defining a correspondence relationship between a signal/channel for training of an AI/ML model and a signal/channel for inference according to an embodiment of the present disclosure.

FIG. 29 illustrates a method of configuring/indicating/defining a correspondence relationship between a signal/channel for training of an AI/ML model and a signal/channel for inference according to an embodiment of the present disclosure.

FIG. 30 illustrates a method of configuring/indicating/defining a correspondence relationship between a signal/channel for training of an AI/ML model and a signal/channel for inference according to an embodiment of the present disclosure.

FIG. 31 illustrates a method of configuring/indicating/defining a correspondence relationship between a signal/channel for training of an AI/ML model and a signal/channel for inference according to an embodiment of the present disclosure.

FIG. 32 illustrates a signal/channel for training and inference of an AI/ML model according to an embodiment of the present disclosure.

FIG. 33 illustrates a signal/channel for training and inference of an AI/ML model according to an embodiment of the present disclosure.

FIG. 34 is a diagram illustrating an operation of a terminal for a wireless channel transmission and reception method according to an embodiment of the present disclosure.

FIG. 35 is a diagram illustrating an operation of a base station for a wireless channel transmission and reception method according to an embodiment of the present disclosure.

FIG. 36 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

**EP 4 429 179 A1**

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator

- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

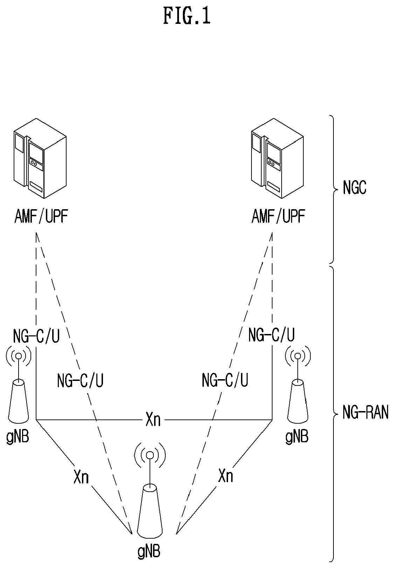

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

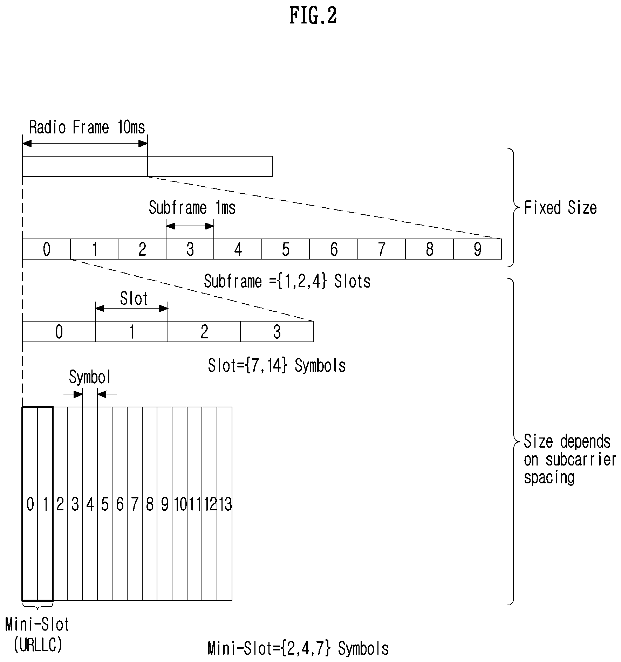

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |

(continued)

| μ | Δf=2$^{\mu}$ · 15 [kHz] | CP |
|---|---|---|
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c$=1/ ($\Delta f_{max} \cdot N_f$). Here, $\Delta f_{max}$ is 480.103 Hz and $N_f$ is 4096. Downlink and uplink transmission is configured (organized) with a radio frame having a duration of $T_f$=1/ ($\Delta f_{max}N_f$/100) $\cdot T_c$=10ms. Here, a radio frame is configured with 10 subframes having a duration of $T_{sf}$=($\Delta f_{max}N_f$/1000) $\cdot T_c$=1ms, respectively. In this case, there may be one set of frames for an uplink and one set of frames for a downlink. In addition, transmission in an uplink frame No. i from a terminal should start earlier by $T_{TA}$=($N_{TA}$+$N_{TA,offset}$)$T_c$ than a corresponding downlink frame in a corresponding terminal starts. For a subcarrier spacing configuration μ, slots are numbered in an increasing order of $n_s^u \in$ {0,..., $N_{slot}^{subframe,\mu}$-1} in a subframe and are numbered in an increasing order of $n_{s,f}^{\mu} \in$ {0, ..., $N_{slot}^{frame,\mu}$-1} in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

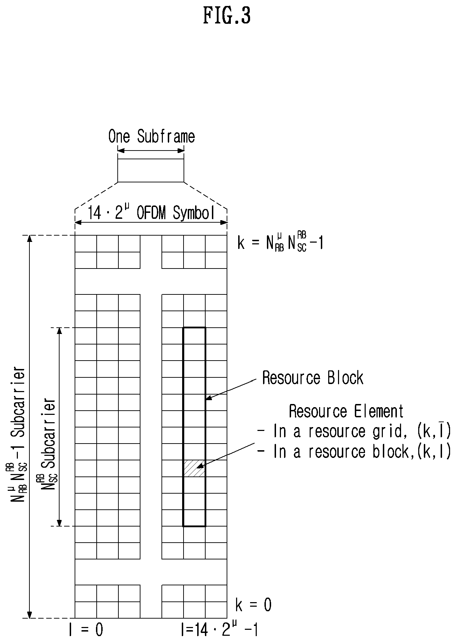

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l') . Here, k=0, ... , $N_{RB}^{\mu}N_{sc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, l=0, ..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

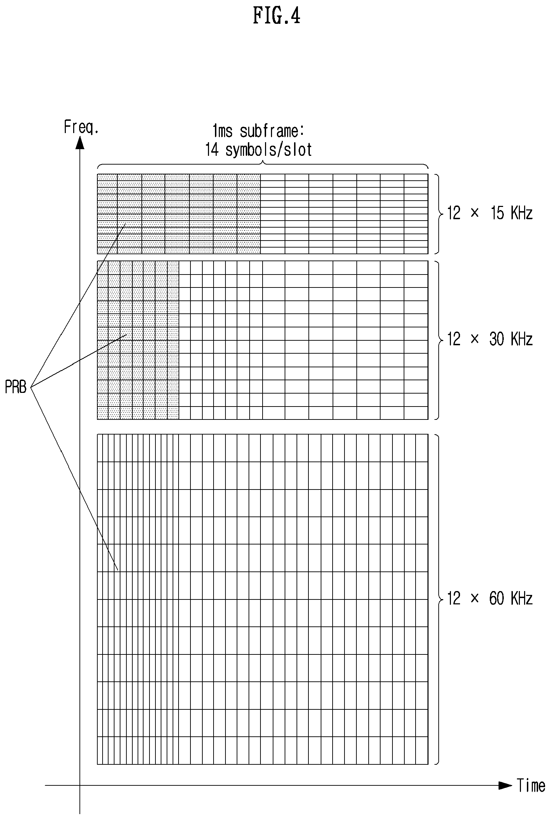

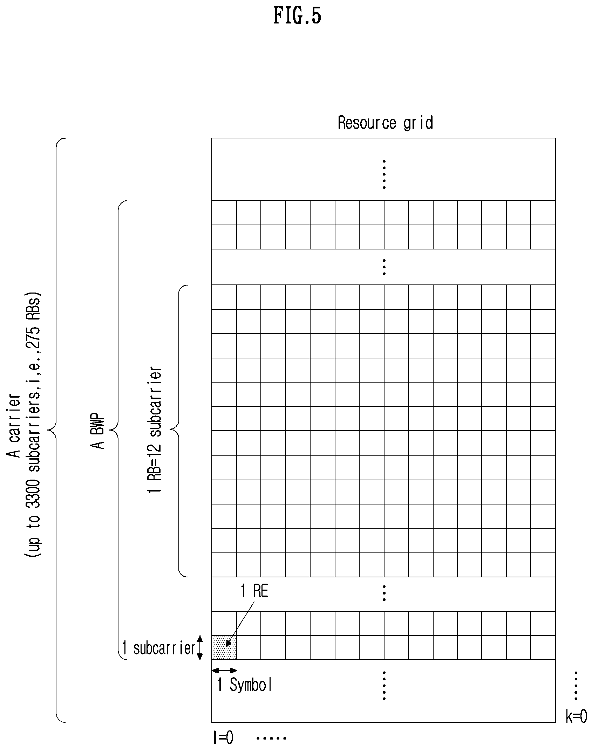

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

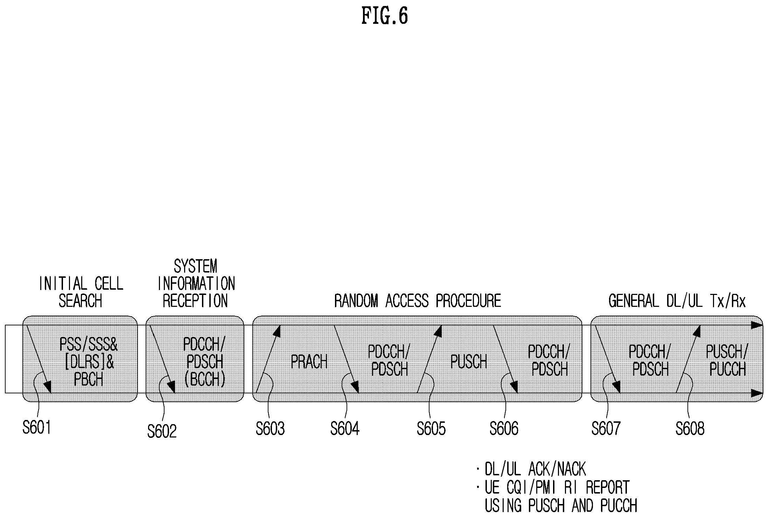

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

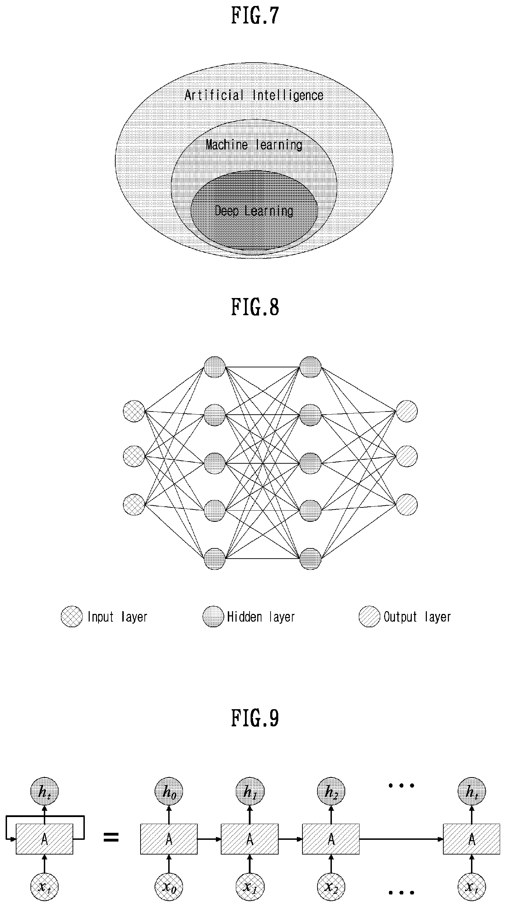

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, R_AN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

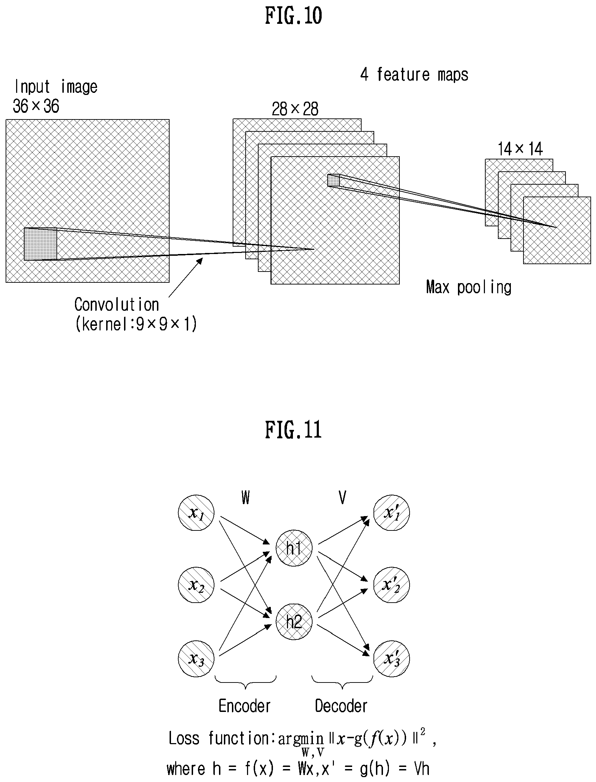

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

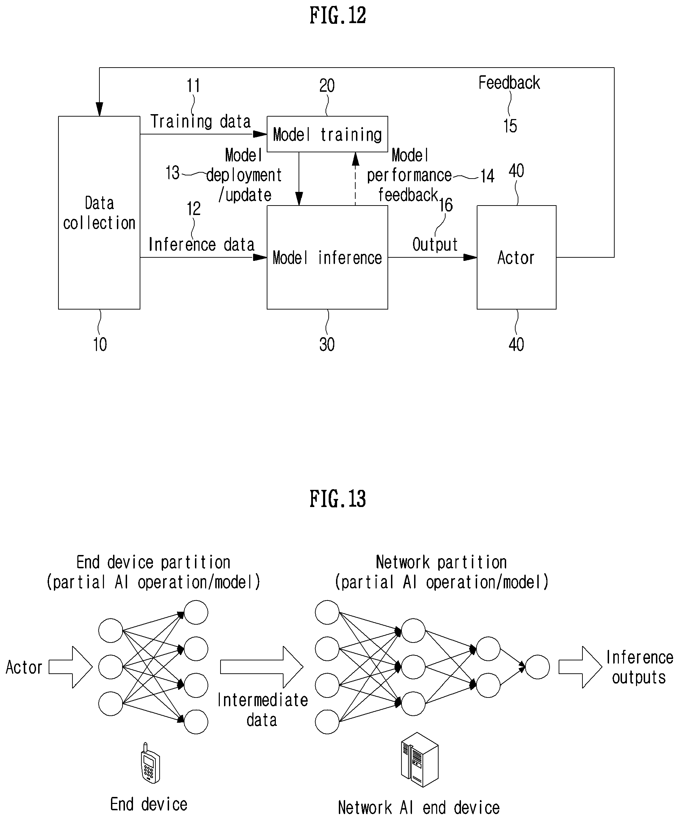

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

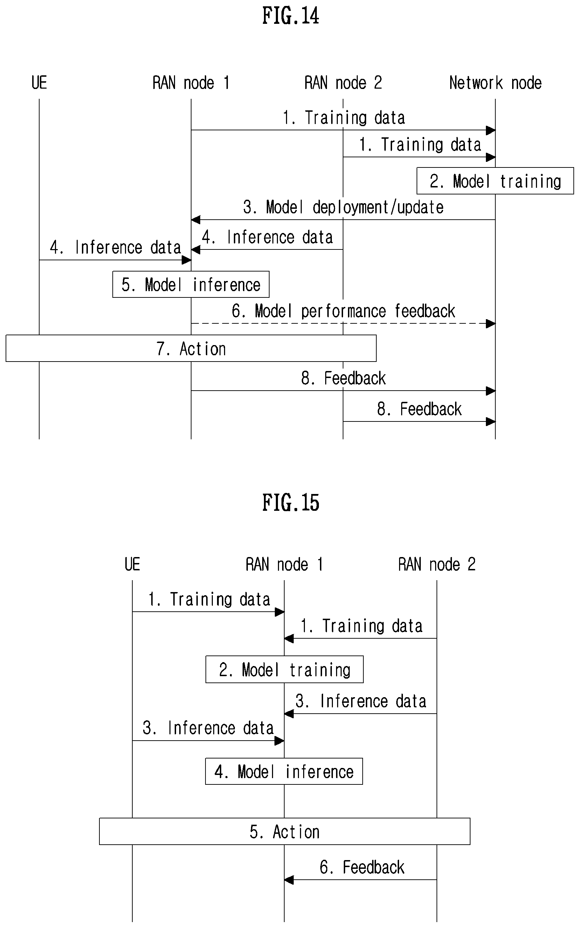

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

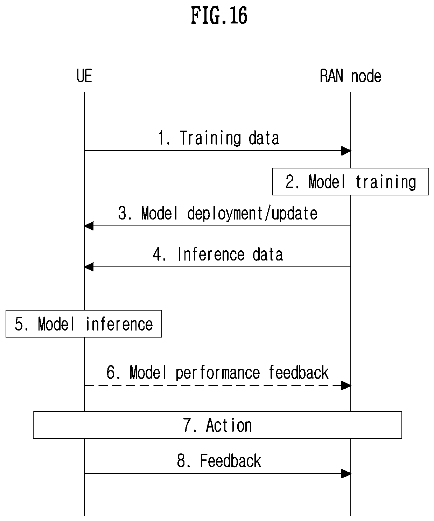

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs) .

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

1-dimensional/2-dimensional convolutional neural network structure

The convolutional neural network (CNN) structure is a structure that can demonstrate good performance in the field of image processing, and based on these characteristics, ways to improve performance by applying the CNN structure to channel estimation in wireless communication systems are being actively discussed. As examples of such CNN structures, a 1-dimensional (1D) CNN structure and a 2D CNN structure may be considered.

First, the 1D CNN structure is described.

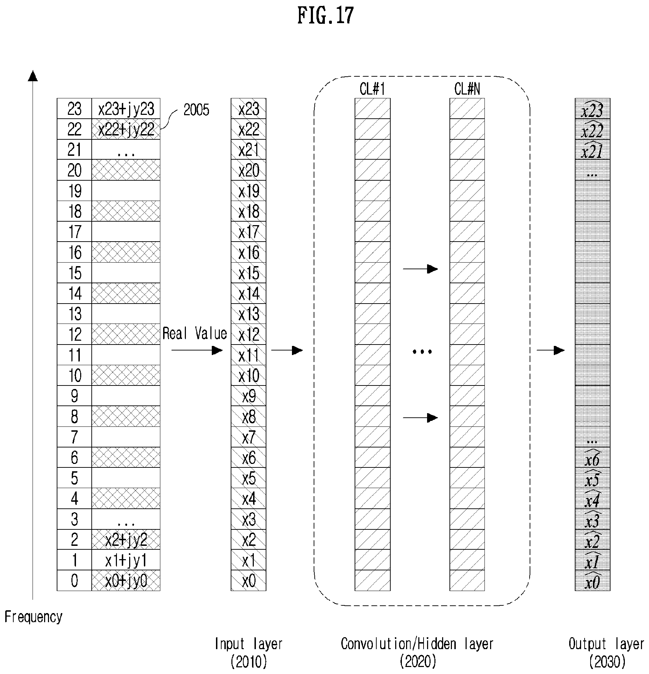

FIG. 17 illustrates a 1D CNN structure for AI/ML-based channel estimation in a wireless communication system to which the present disclosure may be applied.

Referring to FIG. 17, when based on a 1D CNN structure, it is assumed that channel estimation in the frequency domain and channel estimation in the time domain are performed separately. For example, channel estimation in the time domain may be performed after channel estimation in the frequency domain (e.g., 1D Wiener filter).

FIG. 17 illustrates how each layer of a CNN is constructed from channel estimate values (e.g., x0+jy0, ...) in the frequency domain. In Figure 17, real values are exemplified, but it is obvious that the same can be applied to imaginary values. In addition, although the channel estimate value in the frequency domain is exemplified, it is obvious that the same can be applied to the channel estimate value in the time domain.

For example, as shown in FIG. 17, the input layer 2010 of the CNN may be configured based on the channel estimate value (e.g., a real number among the channel estimate values). In relation to the channel estimate value, the shaded area 2005 may mean an area where DMRS is transmitted. Between the input layer 2010 and the output layer 2030, N convolution layers/hidden layers 2020 (e.g., N is a natural number greater than or equal to 1) may be configured. At this time, the output layer 2030 can be constructed from the result of the convolution layer/hidden layer 2020.

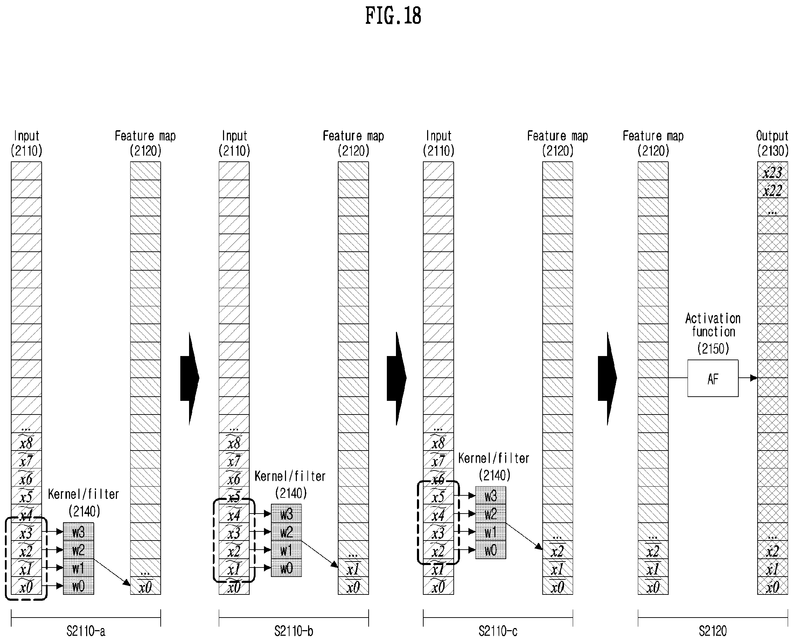

FIG. 18 illustrates an output value estimation method in a 1D CNN structure for AI/ML-based channel estimation in a wireless communication system to which the present disclosure can be applied.

Referring to FIG. 18, a feature map 2120 may be derived from an input value 2110 in each convolutional layer/hidden layer constituting a 1D CNN, and an output value 2130 may be estimated.

For example, the operation to derive the feature map 2120 in each convolutional layer/hidden layer may correspond to [S2110-a, S2110-b, S2110-c, ...], and the operation of estimating the output value 2130 based on the characteristic map 2120 may correspond to [S2120].

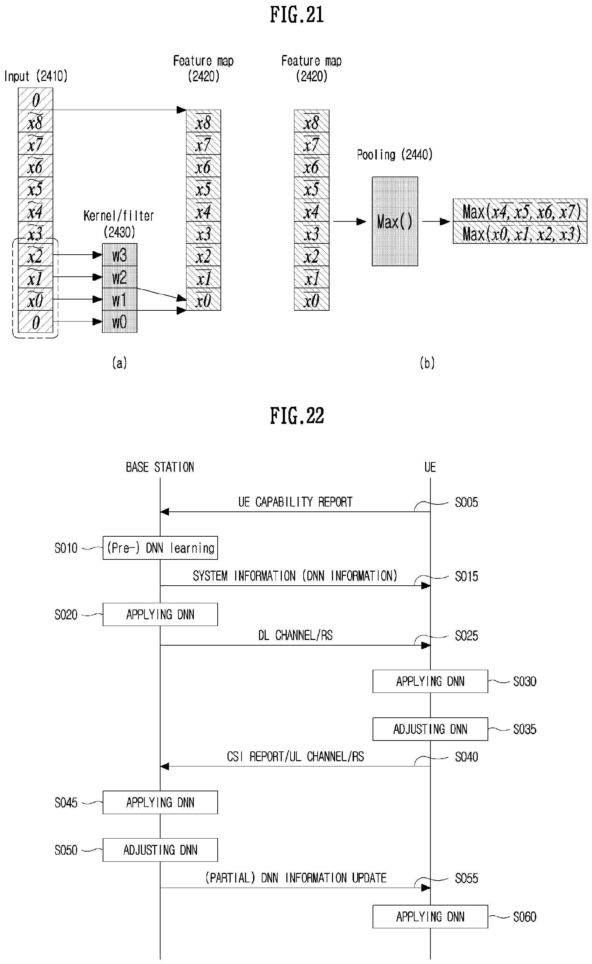

In each convolutional layer/hidden layer, a kernel/filter 2140 that applies a specific weight to the input value of a specific unit may be defined in order to derive the feature map 2120. Each kernel/filter 2140 may be defined with a specific size (or number of weights). Additionally, each kernel/filter 2140 may be defined as a combination of specific weights (e.g., w0/w1/w2/w3). Each kernel/filter 2140 may have a specific movement range for deriving the characteristic map 2120 within the input value 2110, and the specific movement range may be named a stride. Additionally, the kernel/filter 2140 may be defined differently for each convolution layer/hidden layer, or may be defined the same for all convolution layers/hidden layers. Figure 21 shows an example of a convolutional layer/hidden layer consisting of one kernel/filter 2140 set/defined to size 4 and stride 1.

In each convolutional layer/hidden layer, an activation function (AF) 2150 used to estimate the output value based on the feature map 2120 may be defined. An activation function 2150 may be used to add non-linearity to the feature map 2120 obtained through a convolution operation. For example, the activation function 2150 may include a step function, sigmoid function, hyperbolic tangent function, ReLU function, Leaky ReLU function, softmax function, etc.

Next, the 2D CNN structure is described.

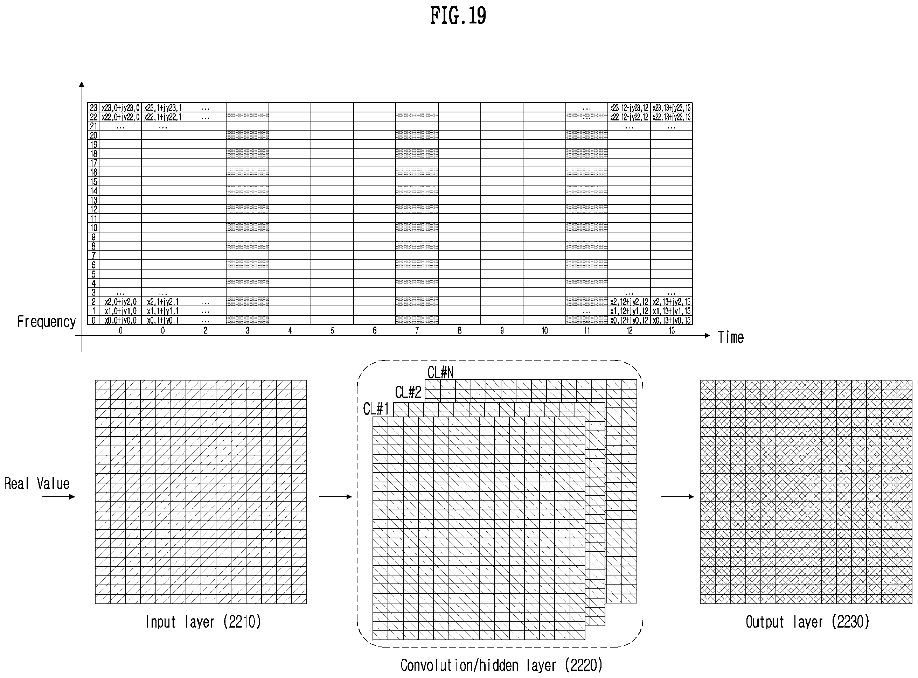

FIG. 19 illustrates a 2D CNN structure for AI/ML-based channel estimation in a wireless communication system to which the present disclosure may be applied.

Referring to FIG. 19, when based on a 2D CNN structure, it is assumed that channel estimation in the frequency domain and channel estimation in the time domain are performed together. For example, channel estimation in the frequency domain and channel estimation in the time domain may be performed simultaneously (e.g., 2D Wiener filter).

FIG. 19 illustrates how each layer of a CNN is constructed from channel estimate values (e.g., x0+jy0, ...) in the frequency domain. In Figure 22, real values are exemplified, but it is obvious that the same may be applied to imaginary values.

The method of configuring each layer of the 2D CNN structure in FIG. 17 is an extension of the method of configuring each layer of the 1D CNN structure in FIG. 19 to the two-dimensional time/frequency domain, and other configuration methods can be assumed to be the same.

For example, as shown in FIG. 19, the input layer 2210 of the CNN may be configured based on the channel estimate value (e.g., a real number among the channel estimate values). In relation to the channel estimate value, the shaded area 2205 may mean an area where DMRS is transmitted. Between the input layer 2210 and the output layer 2230, N convolution layers/hidden layers 2220 (e.g., N is a natural number greater than or equal to 1) may be configured. At this time, the output layer 2230 may be constructed from the result of the convolution layer/hidden layer 2220.

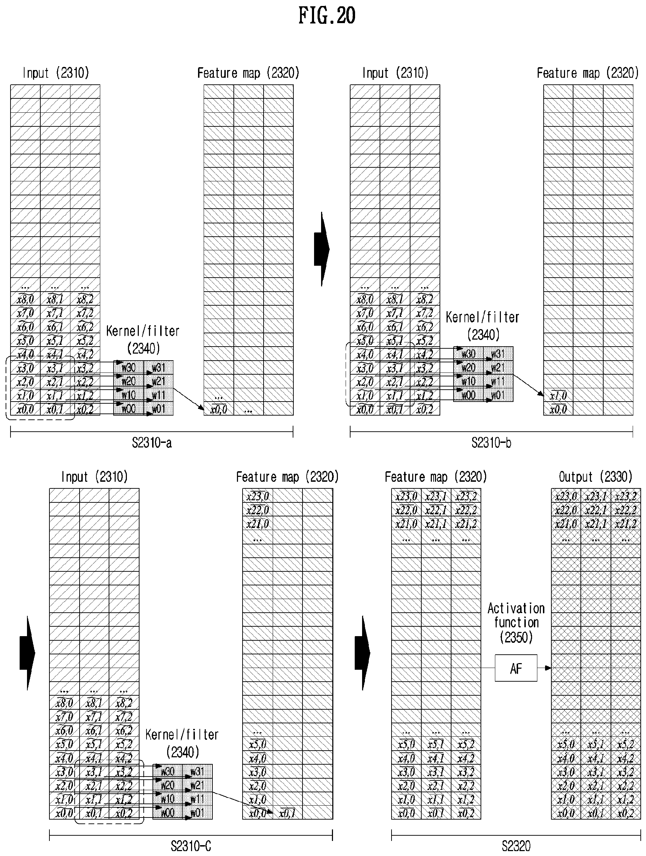

FIG. 20 illustrates an output value estimation method in a 2D CNN structure for AI/ML-based channel estimation in a wireless communication system to which the present disclosure may be applied.

Referring to FIG. 20, a feature map 2320 may be derived from the input value 2310 in each convolutional layer/hidden layer constituting the 2D CNN, and the output value 2330 may be estimated.

The method for estimating the output value in FIG. 20 is an extension of the method for estimating the output value in FIG. 20 to the two-dimensional time/frequency domain, and other methods may be assumed to be the same.

For example, the operation to derive the feature map 2320 in each convolutional layer/hidden layer may correspond to [S2310-a, S2310-b, S2310-c, ...], and the operation of estimating the output value 2330 based on the characteristic map 2320 may correspond to [S2320].

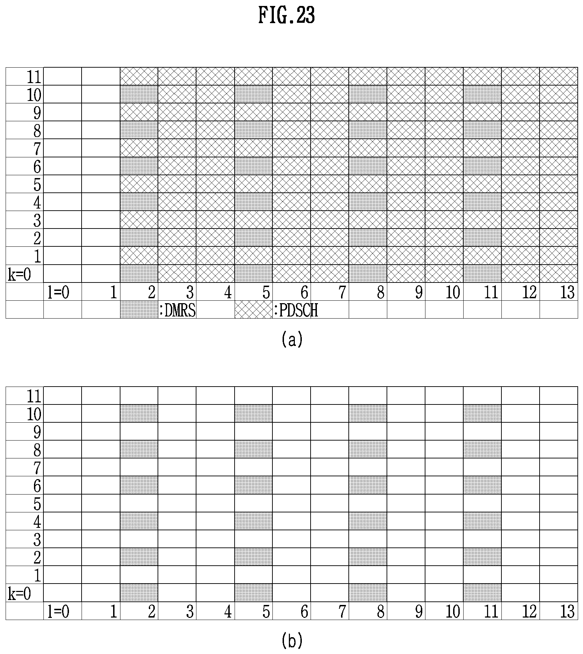

In each convolutional layer/hidden layer, a kernel/filter 2340 that applies a specific weight to the input value of a specific unit may be defined in order to derive the feature map 2320. Each kernel/filter 2340 may be defined with a specific size (or number of weights). In this case, the specific size may be defined based on two dimensions (e.g., two-dimensional time/frequency domain). Additionally, each kernel/filter 2340 may be defined as a combination of specific weights (e.g., w00/w10/w20/w30/w01/w11/w21/w31). Each kernel/filter 2340 may have a specific movement range for deriving the characteristic map 2320 within the input value 2310, and the specific movement range may be named a stride. In this case, the stride may be defined based on two dimensions (e.g., two-dimensional time/frequency domain). Additionally, the kernel/filter 2340 may be defined differently for each convolution layer/hidden layer, or may be defined the same for all convolution layers/hidden layers. Figure 23 shows an example of a convolutional layer/hidden layer consisting of one kernel/filter 2340 set/defined with size 4x2 and stride [1, 1] (e.g. [time domain, frequency domain]).

In each convolutional layer/hidden layer, an activation function (AF) 2350 used to estimate the output value based on the feature map 2320 may be defined. An activation function 2350 may be used to add non-linearity to the feature map 2320 obtained through a convolution operation. For example, the activation function 2150 may include a step function, sigmoid function, hyperbolic tangent function, ReLU function, Leaky ReLU function, softmax function, etc.

In relation to the above-described 1D CNN structure and 2D CNN structure, functions/operations/structures for padding and pooling within the structure can be considered together.

FIG. 21 illustrates padding and pooling in a CNN structure for AI/ML-based channel estimation in a wireless communication system to which the present disclosure may be applied. Specifically, FIG. 21(a) illustrates a padding method, and FIG. 21(b) illustrates a pooling method.

Referring to FIG. 21(a), the feature map 2420 obtained as a result of the convolution operation is smaller in size than the input 2410, and a padding method can be used to prevent this. In other words, the padding method may refer to a function/operation/structure that ensures that the size of the feature map 2420 remains the same as the size of the input 2410 even after the convolution operation. FIG. 21(a) shows an example of applying zero padding in a 1D CNN structure.

Referring to FIG. 21(b), the pooling (or pooling layer) 2440 may refer to a function/operation/structure that reduces the size of the feature map 2420 by downsampling the feature map 2420. Examples of pooling operations include max pooling, average pooling, etc. Figure 21(b) shows an example of applying max pooling in a 1D CNN structure. The same concepts of kernel and stride can be applied to pooling operations, and in this example, a kernel of size 4 and a stride set to 4 are assumed.

In relation to the above-mentioned 1D CNN structure and 2D CNN structure, the description of bias has been omitted, but it is obvious that bias values may be applied in relation to the corresponding CNN structure. When a bias value is used, the bias value may be applied as an addition to a specific feature map to which the kernel is applied.

Additionally, with regard to the 1D CNN structure and 2D CNN structure described above, although the description of the loss function and optimizer has been omitted, it is obvious that the loss function and optimizer can be considered for the training process within the CNN structure (or AI/ML algorithm). Here, the loss function may refer to a function that quantifies the difference between the actual value and the predicted value. As a loss function, mean square error (MSE), cross-entropy, etc. may be considered. The optimizer may refer to a function for updating weight(s) appropriate for each layer based on the loss function. As optimizers, a batch gradient descent, stochastic gradient descent (SGD), and mini-batch gradient descent, momentum, adagrad, RMSprop, adam, etc. may be considered.

Method for configuring a correlation relationship between a (online) training reference signal (OT-RS) and an inference reference signal (I-RS)

Currently, discussions are underway in 3GPP on how AI (Artificial Intelligence)/ML (Machine learning) technology can be applied to standard technology in Rel-18. The main use cases for this are as follows.

- CSI feedback compression (lower overhead)
- Beam management (beam selection, beam recovery, etc.)
- Positioning
- RS overhead reduction (channel estimation)
- Mobility

When applying AI/ML technology to standard technology in the above use cases, methods of applying AI/ML technology can be broadly divided into the following two directions.

- Category 1 (Cat1): A method supported by the standard to share information related to AI/ML models and/or parameters required for a model between a base station and a terminal.
- Category 2 (Cat2): Assuming an environment in which information related to AI/ML models and/or parameters required for a model is not shared between a base station and a terminal, a method for improving features of the current standard or adding new features

It is expected that performance improvement for specific use cases can be expected by applying AI/ML technology in both of the above directions. Among these, if standard technology development is carried out in the above Cat1 direction, the following additional advantages can be expected.

- Training can be performed only on a specific node among a gNB or a UE. For example, based on a dataset for training at a specific node (e.g., gNB or UE), an error can be calculated from a predicted value and an actual value, and parameters necessary for inference, such as weight and bias, can be updated.
- By sharing updated parameters with a node that do not perform training, inference performance of that node can be improved. For example, if training results/information (e.g., weight, bias, etc.) can be shared, a specific node may perform the above update process (e.g., loss function and/or optimizer). Since weight/bias updates, etc.) are unnecessary, inference performance can be improved while lowering the computational complexity and energy consumption of the node.

When considering the development of standard technology in the Cat1 direction, it is necessary to first consider applying the deep (D)NN structure (e.g., CNN), which is typically used/considered based on many research results in the DL (deep learning) field, as a standard technology.

When considering AI/ML algorithms for channel estimation, online training may be necessary to update the algorithm's weight, bias, etc. due to the characteristics of the channel changing over time. To this end, when receiving data, training may be performed again based on a reference signal (RS) corresponding to a data channel (e.g., PBCH/PDSCH/PUSCH/PDCCH/PUCCH, etc.). (i.e., training -> decoding) However, in this case, if inference is performed after training, memory must be occupied for a long time and latency increases. Alternatively, decoding can be performed first and then training can be performed, (i.e. decoding -> training) However, in this case, the results of training cannot be applied to decoding. Therefore, unless data transmission occurs frequently, the longer it takes to receive the next data after training, the longer the training results become untimely (out-of-date), which makes training meaningless and reduces performance.

For the above reasons, when applying an AI/ML algorithm to improve channel estimation performance, online training may be necessary to update the algorithm's weight, bias, etc. Here, when trying to update weight, bias, etc. through online training, in order to use the training results for inference, the same RS pattern as the RS pattern to be used for inference may be required for training.

In addition to the above, channel characteristics may change depending on the transmission/reception TRP (transmission reception point)/panel/beam of a base station/terminal. In this case, online training for AI/ML algorithms needs to be performed independently for each combination of transmission/reception TRP/panel/beam of a base station/terminal with different channel characteristics. When performing multiple independent online trainings as described above, a base station/terminal needs to share with each other which online training results to refer to when transmitting/receiving actual data (e.g., PDSCH/PUSCH/PDCCH/PUCCH, etc.). In this disclosure, when performing multiple independent (online) trainings, we propose a method for a base stations/terminal to share the necessary information about which training results should be referenced when transmitting/receiving actual data.

In the present disclosure, L1 (layer 1) signaling may mean DCI-based dynamic signaling between a base station and a terminal, and L2 (layer 2) signaling may refer to higher layer signaling based on the RRC/MAC control element (CE) between a base station and a terminal.

It is possible to apply/support a method proposed in this disclosure independently and/or in a form of a combination of one or more proposed methods.

The two CNN structures described above describe the structures mainly considered in this proposed method, and are not intended to limit the proposed method, so specific terms are not intended to limit specific functions/operations. Accordingly, the above-described functions/operations/methods may not be limited to specific terms and may be referred to by other terms.

The sizes (e.g., size of input/input layer, size of output/output layer, size of convolution layer, size of kernel, etc.) expressed in the diagram in relation to the two CNN structures described above represent one example and are not intended to limit the proposed method, therefore the proposed methods can be applied to other sizes.

For convenience of explanation, in the proposed method of the present invention, it can be assumed that a base station and/or a terminal uses the two CNN structures (e.g., 1D CNN and/or 2D CNN) described above in the channel estimation process in a base station and/or a terminal. For example, a base station and/or a terminal may transmit a reference signal for channel estimation, and a base station and/or a terminal may estimate a (wireless) channel based on the reference signal. In addition, when estimating the channel, a CNN structure can be used to improve channel estimation performance for a resource area in which a reference signal is not transmitted and/or channel estimation performance for a resource region (e.g., resource elements, resource blocks, OFDM symbols, etc.) in which a reference signal is transmitted.

However, in the proposed method of this disclosure, a main use of the proposed method is proposed/explained/described by assuming a CNN structure and channel estimation for convenience of explanation, but this is not intended to limit the scope of application of this disclosure. Therefore, the proposed method of the present disclosure can be applied to AI/ML algorithms other than the CNN structure and/or NN structure and other uses other than channel estimation, such as CSI feedback/positioning/beam management/channel prediction.

In the present disclosure described later, 'definition' in the proposed method below may mean that a base station/terminal can operate based on the proposed method based on rules agreed in advance between a base station and a terminal.

In addition, in the present disclosure described later, 'configuring/indicating' may mean that a base station configures/indicates a terminal whether the proposed method operates based on L1/L2 signaling and/or the parameters necessary for the proposed method, etc. to ensure that a base station/terminal can operate based on the proposed method.

FIG. 22 is a diagram illustrating a signaling procedure between a base station and a terminal according to an embodiment of the present disclosure.

The example in FIG. 22 is for convenience of explanation and does not limit the scope of the present disclosure. Some step(s) illustrated in FIG. 22 may be omitted depending on the situation and/or setting. Additionally, the order of some step(s) illustrated in FIG. 22 may be changed.

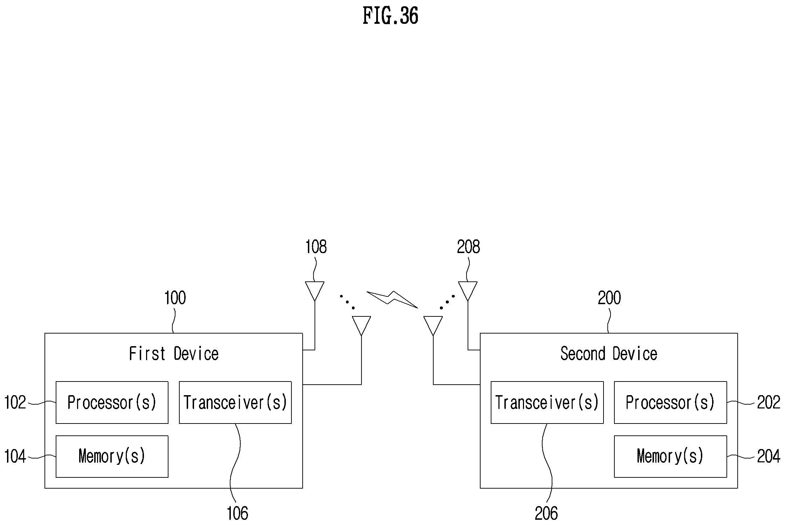

In addition, a base station and a terminal in FIG. 22 are just one example, and may be implemented with the device illustrated in FIG. 36 below. For example, the processors 102/202 of FIG. 36 can control transmission and reception of channels/signals/data/information, etc. using the transceivers 106/206 and control to store transmitted or received channels/signals/data/information, etc. in the memory 104/204. Additionally, the base station in FIG. 22 may refer to a device on a network side.

In addition, in an operation between a base station and a terminal in FIG. 22, the method proposed in this disclosure can be referenced/used even if there is no separate mention.

Although FIG. 22 is shown using a DNN structure as an example, the signaling described in FIG. 22 can be extended and applied to sharing and application of information related to AI/ML algorithms and/or DNN/NN structures.

In step S005, a terminal may transmit/report capability information of the corresponding terminal to a base station. For example, a terminal may report capability information related to embodiments of the present disclosure.

In step S010, a base station may perform (pre) training for a DNN. A base station may obtain information on the parameter(s) required for an AI/ML algorithm and/or DNN/NN structure based on a learning process. For example, based on the process, a base station can obtain parameter(s) related to embodiments in the present disclosure.

In step S015, a base station may configure/indicate a terminal on information related to an AI/ML algorithm and/or DNN/NN structure. A base station may configure/indicate a terminal on information about parameter(s) obtained in step S010. For example, in this step, parameter(s) related to the embodiments in this disclosure may be configured/indicated to a terminal.

In step S020, a base station may apply a DNN structure based on an AI/ML algorithm and/or DNN/NN structure shared with a terminal. For example, a base station can apply a DNN to compress a DL channel and/or RS (Reference Signal) and transmit them to a terminal.

In step S025, a base station may transmit a DL channel and/or RS to a terminal. As described above, for example, when a base station transmits a DL channel and/or RS to the terminal, an AI/ML algorithm and/or DNN/NN structure shared with a terminal may be applied.

In step S030, a terminal may apply a DNN shared from a base station to a DL channel and/or RS. For example, a terminal may decompress a DL channel and/or RS or estimate/predict a DL channel and/or RS based on an AI/ML algorithm and/or DNN/NN structure preset by a base station.

In step S035, a terminal may adjust a DNN parameter based on a DL channel and/or RS. For example, a terminal can perform training based on a DL channel and/or RS, and adjust a DNN parameter based on the training result.

In step S040, a terminal may perform CSI reporting or transmit a UL channel and/or RS. For example, a terminal may perform CSI reporting on the result learned in step S035. In this case, a terminal may compress CSI by applying a DNN. And/or, a terminal may apply a DNN to compress a UL channel and/or RS and transmit them to a base station.

In step S045, a base station may apply a DNN for s CSI report, UL channel, and/or RS. For example, based on an AI/ML algorithm and/or a DNN/NN structure already shared with a terminal, a base station may decompress a CSI report, UL channel, and/or RS, or estimate/predict a CSI report, UL channel, and/or RS.

In step S050, a base station may tune a DNN parameter based on CSI report, UL channel, and/or RS. For example, a base station can perform training based on a UL channel and/or RS, and adjust a DNN parameters based on the training result. And/or, a base station may adjust a DNN parameter based on a UE's reported value.

In step S055, a base station may configure/indicate a terminal to perform an update on parameter(s) for ae AI/ML algorithm and/or DNN/NN structure. For example, a terminal can adjust/update a DNN parameter based on an update configuration/indication of a corresponding base station.

In step S060, a terminal may adjust a DNN parameter. For example, as in the update configuration/indication in step S055, a terminal may adjust a DNN parameter based on value(s) configured/indicated by a base station based on L1/L2 signaling.

Hereinafter, a method for transmitting a DMRS without data for online learning and a method for connecting/corresponding to a specific DMRS value to a CSI-RS/SRS configuration indication will be described in detail.

Embodiment 1

Embodiment 1 relates to a method for a base station/terminal to transmit a DMRS of a data transmission channel without data transmission for online learning.

FIG. 23(a) illustrates an example of a method in which a base station/terminal transmits data and a DMRS of a data transmission channel. Specifically, FIG. 23(a) illustrates a case where a PDSCH mapping type (e.g., PDSCH mapping type A), a (DMRS) configuration type (e.g. configuration type 1), a location for an additional DMRS (e.g., 'dmrs-AdditionalPosition=po3'), and a duration (e.g., $l_d$=24) are configured for a terminal by higher layer parameters.

At this time, a terminal can estimate a wireless channel of a slot and a bandwidth corresponding to a PDSCH scheduled for a terminal using a DMRS transmitted in the 2nd, 5th, 8th, and 11th OFDM symbols. In addition, a terminal can utilize estimated the wireless channel information in a decoding process of the scheduled PDSCH (i.e., transmitted from the 2nd to the 13th OFDM symbol).

FIG. 23(b) illustrates an example of a method in which a base station/terminal transmits a DMRS of a data transmission channel without data transmission (i.e., without PDSCH transmission) for online learning.

Here, in the case of FIG. 23(b), the same as FIG. 23(a), it is assumed that a PDSCH mapping type (e.g., PDSCH mapping type A), a (DMRS) configuration type (e.g. configuration type 1), a location for an additional DMRS (e.g., 'dmrs-AdditionalPosition=po3'), and a duration (e.g., $l_d$=24) are configured for a terminal by higher layer parameters.

FIG. 23(a) and (b) illustrates examples of a PDSCH and PDSCH DMRS, but the present disclosure can be extended and applied to data channels such as a PBCH/PUSCH/PUCCH/PDCCH.

When applying an AI/ML algorithm, online learning may be necessary to update an algorithm's weight and bias. By providing for learning the same RS pattern as an RS pattern to be used for inference during online learning, an accuracy and efficiency of learning can be increased. Additionally, since unnecessary data transmission can be avoided, interference with data channels of other terminals can be reduced and resource efficiency can be increased.

For convenience of description of the present disclosure, DMRS transmission without data transmission is referred to as 'T(training)-DMRS'.

When a base station transmits a T-DMRS to a terminal or/and when a terminal transmits a T-DMRS to a base station, a T-DMRS may have UE-specific/UE-group specific (e.g., multicast)/cell-specific (e.g., broadcast) characteristics.

For this purpose, when performing L1/L2 signaling related to T-DMRS transmission/reception, the parameters may be configured/indicated for a terminal in a terminal-specific/terminal-group-specific (e.g., multicast)/cell-specific (e.g., broadcast) manner.

Embodiment 1-1

Embodiment 1-1 relates to a method in which a base station indicates a terminal to transmit a T-DMRS (i.e. indication for UL RS transmission) and/or a method in which a terminal requests T-DMRS transmission to a base station (i.e. request for DL RS transmission).

For example, a base station may indicate a terminal to transmit a T-DMRS to update a weight and a bias of an AI/ML algorithm for channel estimation. Additionally or alternatively, a terminal may request T-DMRS transmission from a base station to update a weight and a bias of an AI/ML algorithm for channel estimation.

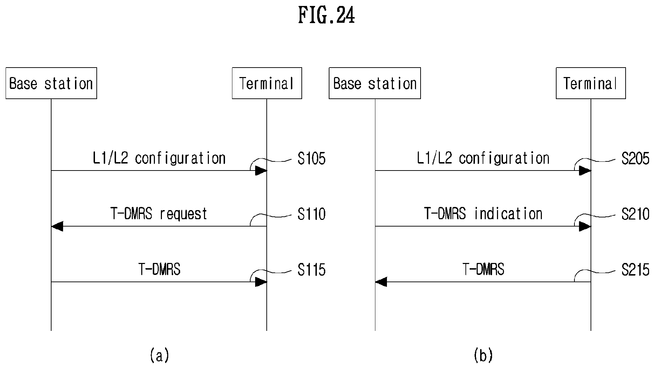

FIG. 24(a) illustrates an example in which a terminal requests T-DMRS transmission from a base station. Specifically, a base station may transmit configuration information (or configuration values) related to T-DMRS transmission to a terminal (before a terminal request a T-DMRS) (S105). A terminal may request DL T-DMRS transmission from a base station based on the configuration information (or configuration value) and/or other request information (S110). A base station may transmit a DL T-DMRS to a terminal based on the terminal's request and/or the configuration information (or configuration value) (115).

FIG. 24(b) illustrates an example where a base station indicates a terminal to transmit a T-DMRS. A base station may transmit configuration information (or configuration values) related to T-DMRS transmission to a terminal (before indicating a terminal to transmit a T-DMRS) (S205). A base station may indicate a terminal to transmit a UL T-DMRS based on the configuration information and/or other indication information (S210). A terminal may transmit a UL T-DMRS to a base station based on the base station's indication and/or the configuration information (or configuration value) (S215).

As described above, a base station/terminal indicates/requests T-DMRS transmission only when additional RS transmission is necessary, so that resources for RS transmission can be utilized more efficiently.

Embodiment 1-2

Embodiment 1-2 relates to a method of including (required) RS pattern information when indicating/requesting T-DMRS transmission. As an example, an indication/request for T-DMRS transmission may include information indicating/requesting RS pattern information. As another example, information indicating/requesting RS pattern information may be transmitted and received separately from an indication/request for T-DMRS transmission.

As an example, RS pattern information may include at least one of a DMRS type (e.g., 'dmrs-Type'), a location for an additional DMRS (e.g., 'dmrs-AdditionalPosition=po3'), a maximum length ('maxLength'), a scrambling ID (e.g., 'scramblingID0', or/and 'scramblingID1'), a number of CDM groups, a RS time/frequency density, a port index, and a number of OFDM symbols.

Here, in information on a number of CDM groups, a value (i.e. muting/rate-matching value) that prevents signals from being transmitted to REs other than the RE where a DMRS is transmitted may be configured/indicated/defined. For example, when a DMRS type is 1, a muting/rate-matching value can be configured/indicated/defined as 2, and when a DMRS type is 2, a muting/rate-matching value can be configured/indicated/defined as 3.

In addition, a port index can be configured/indicated/defined to assume a single port. For example, a port index can be configured/indicated/defined as 1000, etc.

As an example, a method of including 'RS pattern information' (in information indicating/requesting T-DMRS transmission) can be applied to a predefined DMRS pattern. Based on information (or value) configured for a terminal for DL/UL DMRS transmission and reception, a value that can indicate a specific pattern (among DMRS patterns that can be received/transmitted) can be transmitted and received.

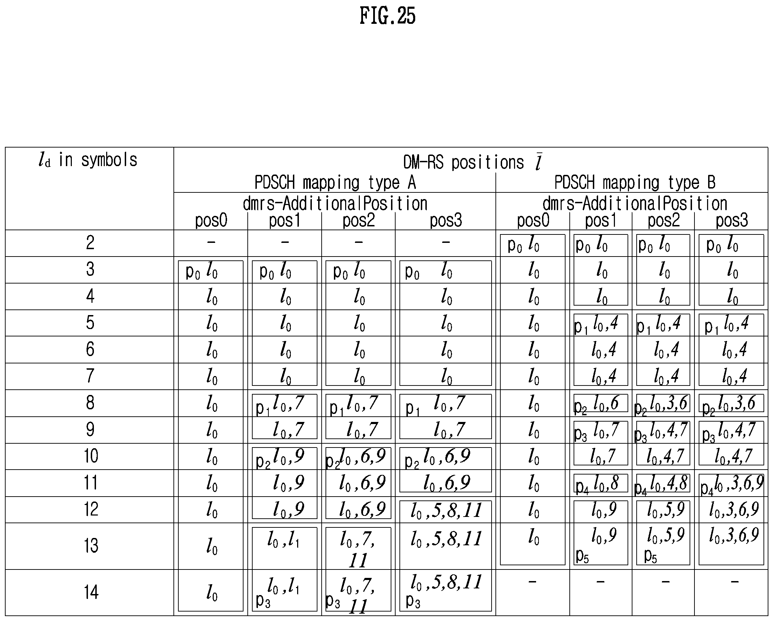

FIG. 25 illustrates an example of a predefined DL DMRS pattern. The final DMRS pattern can be determined based on the table in FIG. 25 and information configured for a terminal (e.g., PDSCH mapping type, location for additional DMRS, and $I_d$).

For example, if 'pos3' is configured as the PDSCH mapping type A and 'dmrs-AdditionalPosition' value for a terminal, a specific DMRS pattern may be determined based on the $I_d$ value among all four DMRS patterns from p0 to p3.

For example, a method of indicating/determining a DMRS pattern with a bitmap is supported by defining bits (e.g., X bits) corresponding to each pattern, and/or selecting one pattern among all possible patterns. A combinatorial method (e.g., log2(X) bits) may be supported. An example of a number of bits required for each case in FIG. 25 may be shown in Table 6 below.

[Table 6]

| | PDSCH mapping type A | | | | PDSCH mapping type B | | | |
|---|---|---|---|---|---|---|---|---|
| | pos0 | pos1 | pos2 | pos3 | pos0 | pos1 | pos2 | pos3 |
| Bitmap | 1 bit | 4 bits | 4 bits | 4 bits | 1 bit | 6 bits | 6 bits | 5 bits |
| Combina toric method | 1 bit | 2 bits | 2 bits | 2 bits | 1 bit | 3 bits | 3 bits | 3 bits |

Although the above-described example targets all possible DMRS patterns, candidate patterns may be limited to some patterns among all patterns in order to reduce a number of bits.

Additionally or alternatively, the above-described example described a method of determining candidate patterns based on a PDSCH mapping type preconfigured for a terminal and a location for an additional DMRS, however regardless of this, candidate patterns may be defined targeting all possible patterns. For example, when PDSCH mapping type A is configured for a terminal, seven DMRS patterns that are unrelated to a configuration value related to a location of an additional DMRS can be defined as candidate patterns.

Additionally or alternatively, a DMRS pattern may be determined based on a preconfigured value for DMRS reception/transmission, such as 'dmrs-Type' and 'maxLength'.

Although a method of determining a pattern of a DL DMRS has been described with reference to FIG. 25, the method described above can be extended and applied to the UL DMRS. That is, 'RS pattern information' may be included (in information indication/requesting a T-DMRS) both when a base station indicates a terminal to transmit a UL T-DMRS and/or when a terminal requests a base station to transmit a DL T-DMRS.

Additionally or alternatively, RS pattern information may be configured/indicates (prior to the T-DMRS indication/request and/or prior to T-DMRS transmission) based on L1/L2 signaling, or RS pattern information may be predefined as a fixed value.

When a base station transmits configuration/indication information related to a T-DMRS to a terminal, the configuration/instruction information may have terminal-specific/terminal-group specific (e.g., multicast)/cell-specific (e.g., broadcast) characteristics. For this purpose, when L1/L2 signaling related to T-DMRS transmission/reception is performed, corresponding parameters may be configured/indicated to a terminal in a terminal-specific/terminal-group-specific (e.g., multicast)/cell-specific (e.g., broadcast) manner.

Embodiment 1-3

Embodiment 1-3 relates to a method of indicating/requesting that only an RS pattern in a specific domain among frequency or time domain RS patterns be transmitted when a terminal/base station indicates/requests T-DMRS transmission.

As an example, when all RS patterns in a frequency/time domain are transmitted, an RS patterns may be transmitted as shown in FIG. 23(b).

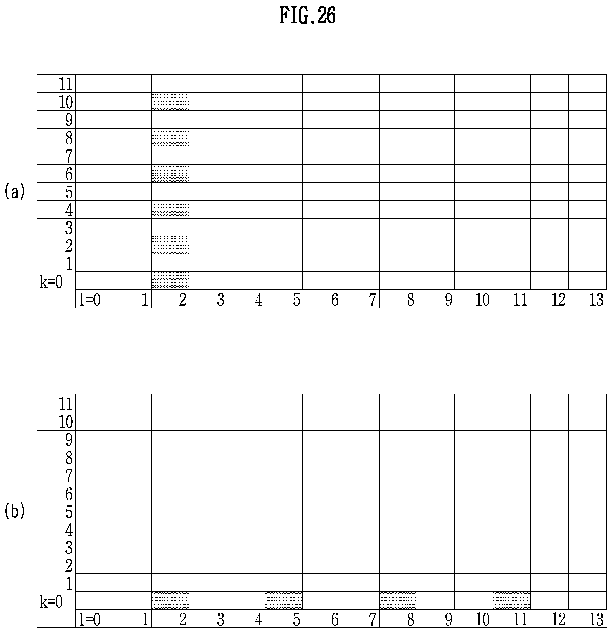

Here, when it is indicated/requested to transmit only an RS pattern in a frequency domain, as shown in FIG. 26(a), a DMRS of a single OFDM symbol (or, group of OFDM symbols) can be transmitted. That is, one symbol of DMRS can be transmitted in a specific OFDM symbol.

As another example, when it is indicated/requested to transmit only an RS pattern in a time domain, a DMRS of a single RE (or group of REs) may be transmitted, as shown in FIG. 26(b). That is, a DMRS of 1 RE may be transmitted in a specific RE.

Here, when an RS is transmitted only in a specific RE, the number of samples required for input data (or input value) may be insufficient. To compensate for this, an RS pattern configured with 1 RE (or group of REs) may be transmitted repeatedly in specific units (e.g., x (P)RB/RE/PRG) (x is a natural number greater than or equal to 1) and/or may be transmitted within a specific duration (e.g. scheduling/configuration bandwidth, etc.).

The 'method of transmitting only an RS pattern in a specific domain' can be applied both when a base station indicates a terminal to transmit a UL T-DMRS and/or when a terminal requests a base station to transmit a DL T-DMRS.

Additionally or alternatively, a 'method of transmitting only an RS pattern of a specific domain' may be configured/indicated (prior to the T-DMRS indication/request and/or prior to T-DMRS transmission) based on L1/L2 signaling. As another example, 'a method of transmitting only an RS pattern of a specific domain' can be defined in advance.

When a base station transmits configuration/indication information related to a 'method of transmitting only an RS pattern of a specific domain' to a terminal, the configuration/indication information may have terminal-specific/terminal-group specific (e.g., multicast)/cell-specific (e.g., broadcast) characteristics. For this purpose, when L1/L2 signaling related to T-DMRS transmission/reception is performed, corresponding parameters may be configured/indicated to a terminal in a terminal-specific/terminal-group-specific (e.g., multicast)/cell-specific (e.g., broadcast) manner.

By configuring AI/ML algorithms that are independent of each other in a frequency domain and a time domain by a base station/terminal, a weight and a bias for channel estimation in a frequency domain and a time domain can be defined separately. Resources can be utilized more efficiently by separately transmitting an RS pattern in a frequency domain and an RS pattern in a time domain depending on the channel situation.

For example, channel estimation in a frequency domain may be related to correlation in a frequency domain and average delay/delay spread characteristics of a channel. Additionally, channel estimation in a time domain may be related to correlation in a time domain and Doppler shift/Doppler spread characteristics of a channel.

Accordingly, a situation may occur in which only channel characteristics in a time domain change while channel characteristics in a frequency domain remain almost unchanged, and an opposite situation may also occur. In this way, a channel state can change depending on different characteristics, and by transmitting an RS pattern in a frequency or a time domain independently from each other depending on a situation of a base station/terminal, unnecessary RS transmission can be minimized and resource efficiency can be improved.

Embodiment 1-4

Embodiment 1-4 relates to a method for including time/frequency resource region information in which an RS (e.g., DMRS) to indicate/request T-DMRS transmission will be transmitted. As an example, an indication/request for T-DMRS transmission may include time/frequency resource region information where an RS will be transmitted. As another example, time/frequency resource region information where an RS will be transmitted may be transmitted and received separately from an indication/request for T-DMRS transmission.

Time/frequency resource region information where an RS will be transmitted may include at least one of a cell (index), a BWP (index), a bandwidth, a subcarrier (index), a number of OFDM symbols, a period (e.g., periodic, semi-persistent, aperiodic), an offset in a period, or a duration.

Additionally or alternatively, time/frequency resource region information where an RS will be transmitted may be configured/indicates (prior to the T-DMRS indication/request and/or prior to T-DMRS transmission) based on L1/L2 signaling. As another example, time/frequency resource region information where an RS will be transmitted may be defined in advance.

When a base station transmits configuration/indication information related to 'time/frequency resource region information where an RS will be transmitted' to a terminal, the configuration/instruction information may have terminal-specific/terminal-group specific (e.g., multicast)/cell-specific (e.g., broadcast) characteristics. For this purpose, when L1/L2 signaling related to T-DMRS transmission/reception is performed, corresponding parameters may be configured/indicated to a terminal in a terminal-specific/terminal-group-specific (e.g., multicast)/cell-specific (e.g., broadcast) manner.

Embodiment 1-5

Embodiment 1-5 relates to a method for a base station to define a new DCI format and/or a new RNTI to indicate a terminal to transmit a T-DMRS.

For example, a terminal that is configured/indicated to transmit an uplink T-DMRS based on a new DCI format/new RNTI can transmit an uplink T-DMRS. Alternatively, a terminal that has been configured/indicated to transmit a downlink T-DMRS can receive a downlink T-DMRS.

For example, a terminal that is configured/indicated with downlink T-DMRS transmission based on the DCI format and/or RNTI and receives a downlink T-DMRS accordingly may not separately transmit a HARQ ACK for DCI (e.g., scheduling DCI) corresponding to the T-DMRS configuration/indication to a base station.

The above-described embodiments (e.g., Embodiment 1, Embodiment 1-1, Embodiment 1-2, Embodiment 1-3, Embodiment 1-4, Embodiment 1-5, etc.) are described based on a DMRS. As another example, the method of the present disclosure can be extended and applied to a DL/UL RS (e.g., CSI-RS/SRS/TRS, etc.) other than a DMRS.

Additionally or alternatively, when the method of the present disclosure is extended and applied to other RSs, an RS for learning an AI/ML algorithm, like a T-DMRS, may be named a T-RS.

In the above-described embodiment (e.g., Embodiment 1, Embodiment 1-1, Embodiment 1-2, Embodiment 1-3, Embodiment 1-4, Embodiment 1-5, etc.), a PDSCH/PUSCH has been described as an example of a channel for transmitting data, but it is not limited thereto. The method of the present disclosure can be extended and applied to channels that transmit data other than a PDSCH/PUSCH (e.g., PDCCH/PUCCH/PBCH/PRACH, etc.).

In other words, the method of the present disclosure can be extended and applied to a method for transmitting an (additional) RS for learning (of AI/ML algorithm and/or NN). The above-described PDSCH/PUSCH/PDCCH/PUCCH, etc. may be named data/control-less PxxCH (e.g., data-less PDSCH/PUSCH, UCI-less PUCCH, DCI-less PDCCH, etc.).

For periodic RS transmission of a data/control-less PxxCH, a UCI-less PUCCH, a DCI-less PDCCH, etc. may be considered. For example, in the case of a PUCCH, DMRS patterns may be defined differently for each format. In the case of a PUCCH format for sequence detection (e.g., format 0/1), a DMRS may not be transmitted/received separately. In this case, a separate transmission method (e.g., a method of transmitting a PUCCH corresponding to a promised UCI bit) may be applied. In addition, a method for specifying the transmission method of the PUCCH (i.e., a method of transmitting a predefined UCI PUCCH) may be separately defined.

Additionally or alternatively, a method of transmitting and receiving only a DMRS through a data/control-less PxxCH, as well as a method of transmitting and receiving a data/control payload (e.g. predefined DL/UL-SCH, predefined data sequence, predefined DCI/UCI, etc.) promised (or, configured/indicated in advance) between a base station/terminal along with a DMRS for learning can be applied.

In addition, for semi-persistent transmission, SPS PDSCH transmission without a (DL-SCH less) DL-SCH and/or a UL-SCH less SPS PUSCH with may be defined/configured/indicated.

Here, SPS PDSCH/PUSCH transmission may be configured/indicated by RRC signaling, or RRC signaling and DCI. If an SPS PDSCH/PUSCH is configured/indicated by RRC signaling and DCI, activation/deactivation (or release) can be controlled by DCI, and thus resources can be utilized more efficiently.

Hereinafter, in the case of performing multiple independent (online) training in the present disclosure, a method for a base stations/terminal to share necessary information about which training result should be referenced when transmitting/receiving actual data is proposed.


Embodiment 2

Embodiment 2: Method of configuring/indicating/defining a correspondence relationship between a reference signal for (online) training and a reference signal to actually apply the result learned based on the (online) training

In addition, in this disclosure, the 'result learned based on (online) training' may mean a result obtained/updated through learning for variables of an AI/ML algorithm and/or an NN (e.g., for variables such as weight and bias).

In addition, in the present disclosure, a reference signal (RS) transmitted/received for (online) training is referred to as an OT-RS (online training RS) and an RS transmitted/received for inference is referred to as an I-RS (inference RS). However, since these terms are not intended to limit the proposed scope of the present disclosure, the proposed method can be applied even if it is described/replaced with other terms.

In addition, with respect to a 'correspondence relationship' (i.e., a correspondence relationship between an OT-RS and an I-RS) in the present disclosure, one and/or two or more plurality of correspondence relationships are configured/indicated/defined between a base station and a terminal. For example, a correspondence relationship between one OT-RS and one I-RS or a correspondence relationship between one OT-RS and multiple I-RSs or a correspondence relationship between multiple OT-RSs and one I-RS can be set/instructed/defined for the terminal.

In the proposed method of this disclosure, an RS (e.g., CSI-RS(channel state information-RS)/SRS(sounding RS)/DMRS(demodulation RS)/PTRS(phase tracking RS)/TRS(tracking RS)/etc.) is mainly described, such as an OT-RS and an I-RS, however the proposed method can be equally applied not only to an RS but also to a physical channel/resource such as a PDSCH/PUSCH/PDCCH/PUCCH/PBCH(physical broadcast channel)/PRACH(physical random access channel).

In the proposed method of this disclosure, a 'correspondence relationship' may mean a correspondence relationship between a source RS/resource/physical channel and a target RS/resource/physical channel.

Here, in the case of a source RS/resource/physical channel, it may mean an RS/resource/physical channel transmitted to learn (e.g. online training) a parameter/variable/characteristic (e.g. weight/bias, etc.) corresponding to an AI/ML algorithm and/or an NN. A base station/terminal can learn a parameter/variable/characteristic required to perform an AI/ML algorithm and/or an NN based on the source RS/resource/physical channel. In other words, a base station/terminal can perform AL/ML model training using a source RS/resource/physical channel and in the present disclosure, an OT-RS is mainly described as an example of a source RS/resource/physical channel, but the present disclosure is not limited to this.

In addition, in the case of a target RS/resource/physical channel, it may mean an RS/resource/physical channel transmitted to perform inference based on a parameter/variable/characteristic (e.g. weight/bias, etc.) corresponding to an AI/ML algorithm and/or an NN. A base station/terminal may perform inference based on the target RS/resource/physical channel and ab AI/ML algorithm and/or an NN and a corresponding parameter/variable/characteristic (e.g., weight/bias, etc.). In other words, a base station/terminal can use a target RS/resource/physical channel as an input value of an AL/ML model to derive an output value (i.e. inference), and in the present disclosure, an I-RS is mainly described as an example of a target RS/resource/physical channel, but the present disclosure is not limited to this.

Here, the 'parameter/variable/characteristic' may mean a parameter/variable/characteristic learned (in advance) (e.g. by online training) from a source RS/resource/physical channel corresponding to a target RS/resource/physical channel.

Based on this proposed method, as an example, a terminal may assume that a DM-RS corresponding to a PDSCH received from a base station is an I-RS and perform channel estimation corresponding to a PDSCH and a DM-RS using a parameter/variable (e.g. weight, bias, etc.) of an AI/ML model previously learned through an OT-RS and use this for PDSCH decoding.

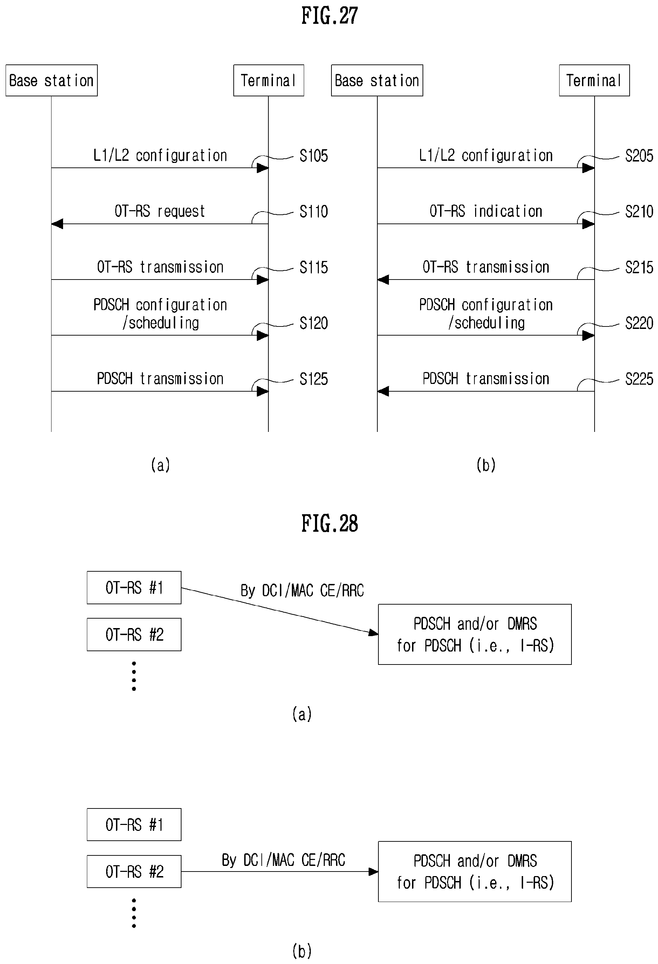

FIG. 27 illustrates signaling for configuring/indicating/defining a correspondence between a signal/channel for training of an AI/ML model and a signal/channel for inference according to an embodiment of the present disclosure.

FIG. 27(a) illustrates a case where a terminal requests to a base station, and Figure 27(b) illustrates a case where a base station indicates a terminal.

Referring to FIG. 27(a), a base station may configure a setting value related to OT-RS transmission to a terminal in advance (through L1 and/or L2 signaling) before a terminal requests an OT-RS (S105).

A terminal may request DL OT-RS transmission from a base station including the setting value (S105) and/or other request information (S110). For example, the 'setting value and/or other request information' may include information related to a resource/index of an OT-RS (e.g., OT-RS1 or OT-RS2, etc.)

A base station may transmit a DL OT-RS to a terminal based on the terminal's request (S110) and/or the preset value (S105) (S115). In the case of the 'transmitting an OT-RS to the terminal,' information related to the index of the OT-RS may be configured/indicated to a terminal before transmitting an OT-RS. And/or a terminal can perform (online) training for each resource/index of the OT-RS and independently store/configure/manage/use/apply the result.

A base station may configure (e.g., configured grant)/indicate (e.g., scheduling by DCI) PDSCH transmission to a terminal (S120). In the case of configuring/indicating PDSCH transmission', information related to a PDSCH and/or a resource/index of a PDSCH's DMRS (i.e., I-RS) and a corresponding OT-RS may be configured/indicated together or in advance.

A base station may transmit a PDSCH to a terminal (S125). Before receiving a PDSCH, a terminal can perform channel estimation corresponding to the PDSCH and a DMRS using a parameter/variable (e.g. weight, bias, etc.) previously learned through the PDSCH and/or an OT-RS corresponding to the PDSCH's DMRS (i.e. I-RS) and use this for PDSCH decoding.

Referring to FIG. 27(a), a base station can configure a settings value related to OT-RS transmission to a terminal in advance (through L1 and/or L2 signaling) before indicating a terminal to transmit an OT-RS. (S205).

A base station may indicate a terminal to transmit a UL OT-RS including the setting value (S205) and/or other indication information (S210). The 'setting value and/or other indication information' may include information related to a resource/index of an OT-RS.

A terminal may transmit a UL OT-RS to a base station based on the base station's indication (210) and/or a preset value (S105) (215).

A base station may configure (e.g., configured grant)/indication (e.g., scheduling by DCI) PUSCH transmission to a terminal (S220) . In the case of configuring/indicating PUSCH transmission', information related to a resource/index of a PUSCH and/or a PUSCH's DMRS (i.e., I-RS) and a corresponding OT-RS may be configure/indicated together or in advance.

A terminal may transmit a PUSCH to a base station (S225). A base station can perform (online) training for each resource/index of the OT-RS and independently store/configure/manage/use/apply the result. And/or a base station may perform channel estimation corresponding to the PUSCH using a parameter/variable (e.g. weight, bias, etc.) previously learned through the PUSCH and/or the DMRS (i.e., I-RS) of the PUSCH and a corresponding OT-RS before receiving the PUSCH and use it for PUSCH decoding.

Based on the above proposed method, a relationship between a RS/physical channel/resource for (online) training and a RS/physical channel/resource for inference can be configured/indicated/defined between a base station and a terminal. Based on this, a base station/terminal can perform (online) training for each specific RS/physical channel, and the learning result can be stored/configured/managed/used/applied separately/independently. And, when a base station/terminal transmits/receives a RS/physical channel/resource for actual data exchange, since a RS/physical channel/resource for (online) training corresponding to a RS/physical channel/resource for inference can be configured/indicated/defined, the base station/terminal can appropriately use/apply the previously learned result to a RS/physical channel/resource for inference.

Embodiment 2-1: When transmitting a physical channel/(physical) data channel (e.g., PDSCH/PUSCH/PDCCH/PUCCH/PBCH/PRACH, etc.) and/or an RS (e.g., CSI-RS/SRS/PTRS/DMRS/TRS, etc.), a resource/index for a corresponding physical channel/(physical) data channel and/or a DMRS (i.e., I-RS) corresponding to a corresponding physical channel/(physical) data channel and/or an OT-RS corresponding to a corresponding RS may be configured/indicated/defined.

A resource/index for the corresponding OT-RS may be configured/indicated by higher layer signaling or dynamic signaling (e.g., RRC/MAC CE/DCI). For example, DCI1, which schedules PDSCH1 transmission, may indicate scheduling information for PDSCH1 and corresponding OT-RS1 (i.e., corresponding to the PDSCH1 and/or a DMRS for the PDSCH1).

In the above proposed method, the following can be applied as an example of a method of 'configuring/indicating/defining a resource/index for OT-RS'.

Embodiment 1: A separate resource may be defined for an OT-RS. And/or an identifier (ID) (/index) for identification may be assigned/configured/indicated/defined for the resource. And/or, when transmitting a physical channel/(physical) data channel and/or an RS, an ID (/index) for the corresponding physical channel/(physical) data channel and/or a DMRS (i.e., I-RS) corresponding to a corresponding physical channel/(physical) data channel and/or an OT-RS corresponding to a corresponding RS may be configured/indicated/defined. FIG. 28 shows this example.

FIG. 28 illustrates a method of configuring/indicating/defining a correspondence relationship between a signal/channel for training of an AI/ML model and a signal/channel for inference according to an embodiment of the present disclosure.

In FIG. 28, a signal/channel for training of an AI/ML model is assumed to be an OT-RS, and a signal/channel for inference is assumed to be a PDSCH and/or a DMRS for a PDSCH.

Referring to FIG. 28, to configure/indicate a correspondence relationship between an OT-RS and a PDSCH and/or a DMRS for a PDSCH, an OT-RS may be directly configured/indicated through higher layer/dynamic signaling (e.g., DCI/MAC CE/RRC) for a PDSCH and/or a DMRS for a PDSCH. However, this does not limit the proposed method of the present disclosure, and in addition/alternative to this, a method of defining a separate RS/resource pool and configuring/indicating an OT-RS based on the pool is also possible.

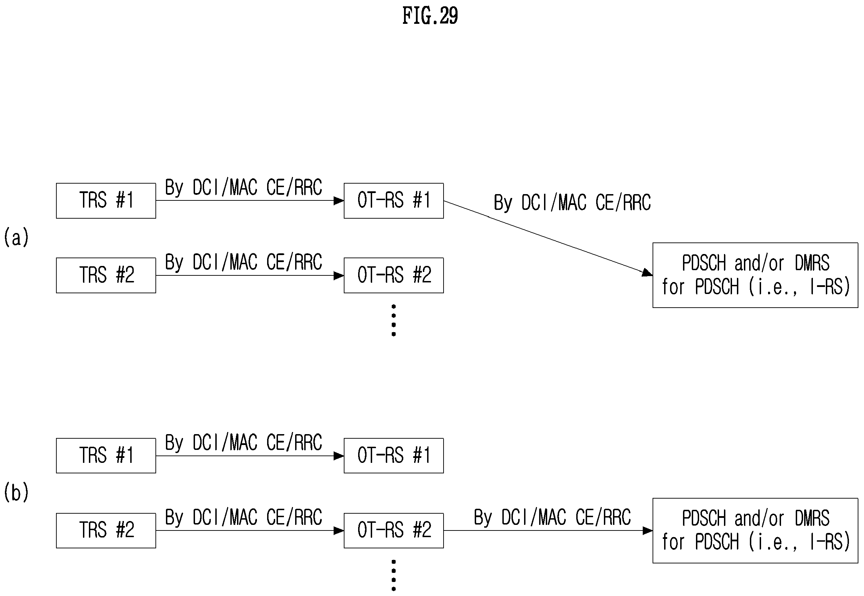

Regarding example 1 above, a method of additionally configuring/indicating/defining a correspondence relationship between an OT-RS and an RS (or physical (data) channel/ (physical) data channel) for other purposes such as a TRS/CSI-RS/SRS (or PDSCH/PUSCH/PDCCH/PUCCH/PBCH/PRACH, etc.) can also be considered. FIG. 29 shows this example.

FIG. 29 illustrates a method of configuring/indicating/defining a correspondence relationship between a signal/channel for training of an AI/ML model and a signal/channel for inference according to an embodiment of the present disclosure.

In FIG. 29, a signal/channel for training of an AI/ML model is assumed to be an OT-RS, and a signal/channel for inference is assumed to be a PDSCH and/or a DMRS for a PDSCH. Also, a signal/channel for other purposes is assumed to be a tracking reference signal (TRS).

Referring to FIG. 29, in order to configuring/indicating an additional correspondence between an OT-RS and an RS/channel for other purposes, an RS/channel for other purposes can be directly configured/indicated through higher layer/dynamic signaling (e.g., DCI/MAC CE/RRC) for an OT-RS. In addition, similar to FIG. 28, to configure/indicate the correspondence relationship between an OT-RS and a PDSCH and/or a DMRS for a PDSCH, an OT-RS may be directly configured/indicated through higher layer/dynamic signaling (e.g., DCI/MAC CE/RRC) for a PDSCH and/or a DMRS for a PDSCH.

In FIG. 29, a signal/channel for other purposes is assumed to be a TRS, but this is not intended to limit the proposed method. In addition/alternative to this, a method of configuring/indicating based on another RS/resource/physical channel and/or a pool of RS/resource/physical channels (e.g., TCI state, etc.) is also possible.

In the case of example 1 above, by directly/explicitly defining an ID (/index/resource) corresponding to an OT-RS and configuring/indicating it directly/explicitly in an I-RS, it may have the feature of being able to configure/indicate/define a correspondence relationship between an OT-RS and an I-RS. Based on these characteristics, when applying the proposed method, the function of a TRS of the current standard can be replaced with an OT-RS without performing TRS transmission. According to current standards, a QCL relationship can be formed as SSB>TRS>DMRS. However, when applying the proposed method, a relationship similar to the existing QCL relationship such as (SSB>)OT-RS>DMRS can be formed without transmitting/receiving a TRS. However, the difference from the current standard is that the correspondence relationship of the proposed method can configure/indicate/define a correspondence relationship between a training RS/resource/physical channel and an inference RS/resource/physical channel for an AI/ML algorithm and/or an NN application.

Example 2: A correspondence relationship between an OT-RS and an RS (or physical channel/ (physical) data channel) for other purposes such as a TRS/CSI-RS/SRS (or PDSCH/PUSCH/PDCCH/PUCCH/PBCH/PRACH, etc.) can be configured/indicated/defined. And/or, when transmitting a physical channel/(physical) data channel and/or an RS, regarding a physical channel/(Physical) data channel and/or a DMRS (i.e., I-RS) corresponding to a physical channel/(Physical) data channel and/or an OT-RS corresponding to an RS, an ID (/index/resource) of an RS (or physical cannel/ (physical) data channel) for other purposes, such as a TRS/CSI-RS/SRS (or PDSCH/PUSCH/PDCCH/PUCCH/PBCH/PRACH, etc.), corresponding to an OT-RS may be configured/indicated/defined.

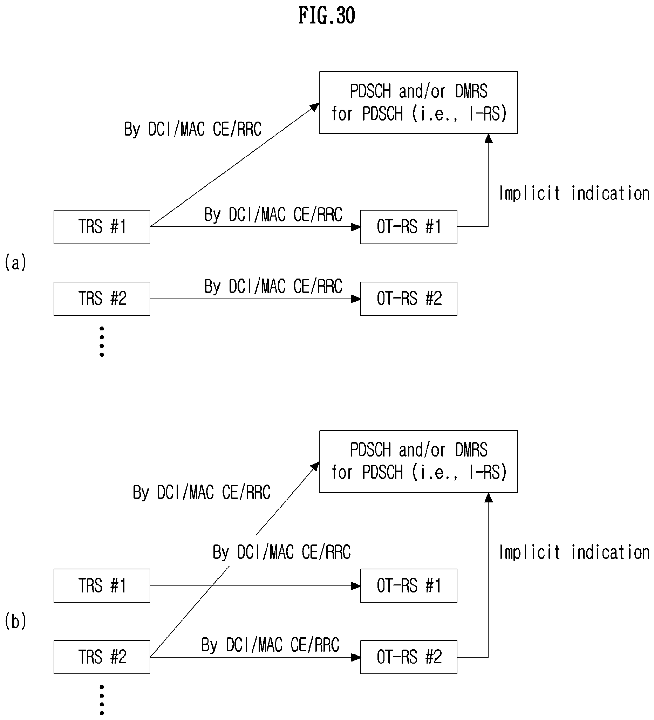

That is, when transmitting a physical channel/(physical) data channel and/or an RS, as an RS for other purposes corresponding to an OT-RS is configured/indicated, an OT-RS can be configured/directed indirectly (implicitly). FIG. 30 shows this example.

FIG. 30 illustrates a method of configuring/indicating/defining a correspondence relationship between a signal/channel for training of an AI/ML model and a signal/channel for inference according to an embodiment of the present disclosure.

In FIG. 30, a signal/channel for training of an AI/ML model is assumed to be an OT-RS, and a signal/channel for inference is assumed to a PDSCH and/or a DMRS for a PDSCH. In addition, it is assumed that a signal/channel for other purposes are a TRS.

Referring to FIG. 30, in order to configure/indicate additional correspondence between an OT-RS and a RS/channel for other purposes, a RS/channel for other purposes can be directly configured/indicated through higher layer/dynamic signaling (e.g., DCI/MAC CE/RRC) for an OT-RS. In addition, as an RS/channel for other purposes are indicated for a PDSCH and/or a DMRS for a PDSCH, an OT-RS for a corresponding PDSCH and/or a DMRS for a PDSCH may be indirectly (implicitly) configured/indicated.

In FIG. 30, a signal/channel for other purposes is assumed to be a TRS, however this is not intended to limit the proposed method. In addition/alternative to this, a method of configuring/indicating based on another RS/resource/physical channel and/or a pool of RS/resource/physical channels (e.g., TCI state, etc.) is also possible.

As shown in FIG. 30, when a correspondence relationship with TRS1/TRS2 is configured/indicated/defined for a specific OT-RS, it can be referred to as OT-RS1/OT-RS2, and a terminal can distinguish between the two OT-RSs. In other words, an OT-RS for which a correspondence relationship with TRS1 is configured/indicated (i.e., OT-RS-TRS1) may be referred to/regarded as OT-RS1, and an OT-RS (i.e., OT-RS-TRS2) for which a correspondence relationship with TRS2 is configured/indicated may be referred to/regarded as OT-RS2.

In order to configure/indicate the above 'correspondence relationship', the following example defined in the current standard can be used. For example, a correspondence relationship between each OT-RS and a corresponding RS for other purposes may be indicated based on a CORESET pool index (CORESETPoolIndex), a CORESET (or group of CORESETs), an SS set (or group of SS sets), a TCI state, an SRS resource indicator (SRI) (or group of SRIs), spatial relationship information (SpatialRelationInfo), a path loss reference signal (PL RS, PathlossReferenceRS) (group of PL RSs), a BWP (or group of BWPs). For example, an OT-RS configured/indicated with TCI state 1 (OT-RS-TCI state1) may be referred to/regarded as OT-RS1, and an OT-RS configured/indicated with TCI state 2 (OT-RS-TCI state2) may be referred to/regarded as OT-RS2.

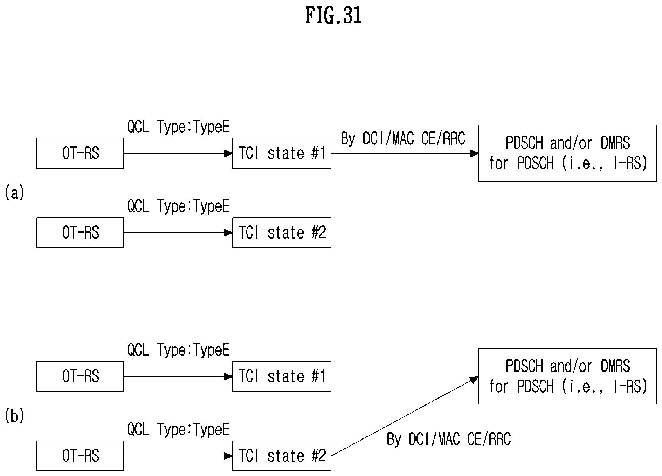

In relation to example 2 above, a method of configuring/indicating a correspondence relationship/correspondence proposed in the persent disclosure by defining a new QCL type within a TCI state defined in the current standard may be considered. FIG. 31 shows an example of this method.

FIG. 31 illustrates a method of configuring/indicating/defining a correspondence relationship between a signal/channel for training of an AI/ML model and a signal/channel for inference according to an embodiment of the present disclosure.

In FIG. 31, a signal/channel for training of an AI/ML model is assumed to be an OT-RS, and a signal/channel for inference is assumed to be a PDSCH and/or a DMRS for a PDSCH.

Referring to FIG. 31, a TCI state of QCL type-E can be configured/indicated for each OT-RS. In this case, a PDSCH for which a corresponding TCI state is configured/indicated and/or a DMRS for a PDSCH may implicitly (indirectly) configured/indicated a correspondence relationship with an OT-RS for which a corresponding TCI state is configured/indicated. For example, for OT-RS 1, TCI state 1 of QCL type-E may be configured/indicated. In addition, if TCI state 1 of QCL type-E is configured/indicated for a PDSCH and/or a DMRS for a PDSCH, a correspondence relationship between a corresponding PDSCH and/or a DMRS for a PDSCH and OT-RS 1 may be implicitly (indirectly) configured/indicated.

In the case of example 2 above, it may have the following features/advantages.

According to the current standard, a QCL relationship can be formed as SSB>TRS>DMRS. Here, before receiving a data channel, if an AI/ML algorithm for channel estimation of a DMRS corresponding to a data channel and/or an OT-RS for learning of an NN are transmitted/received, an OT-RS should be able to be added to a QCL chain of the current standard. (e.g. SSB>TRS>OT-RS>DMRS (for PDSCH) (i.e. I-RS)) When adding an OT-RS to the current QCL chain as above, using an NN can have the following advantages. First, when performing (online) training with an OT-RS, the learning result can be classified and managed by a terminal, and multiple parameter combinations can be managed. (e.g. {weight1, bias1} for TRS1, {weight2, bias2} for TRS 2). Second, after learning with an OT-RS, a terminal can know which an OT-RS to use the result learned when receiving an actual inference RS/resource/physical channel (e.g. PDSCH and DMRS on PDSCH, etc.). For example, if a time/frequency correlation of a channel corresponding to TRS1/2 is different, a terminal may manage different learning results for TRS1/2. (e.g. {weight1, bias1} for TRS1, {weight2, bias2} for TRS 2) In addition, a terminal that has a correspondence relationship between a TRS and an OT-RS in advance, when receiving an actual inference RS/resource/physical channel (e.g., PDSCH and DMRS on PDSCH, etc.), may utilize a parameter combination suitable for an AI/ML algorithm and/or an NN when estimating a channel based on a relationship between a TRS corresponding to an inference RS/resource/physical channel and an OT-RS corresponding to a TRS.

Embodiment 2-2: A number of different OT-RSs that a terminal can support simultaneously can be reported to a base station.

For example, a terminal may report to a base station a number of different OT-RSs that the terminal can support simultaneously using UE capability signaling or CSI feedback.

Here, the 'simultaneous support' may mean that different/independent learning can be performed for each OT-RS and different/independent parameters/variables (weight, bias, etc.) can be stored/configured/managed/used/applied (e.g. {weight1, bias1} for OT-RS1, {weight2, bias2} for OT-RS2, ...).

Embodiment 2-3: For a terminal for which OT-RS reception is configured/indicated, a separate TRS (Tracking RS) may not be configured/indicated/transmitted.

When OT-RS transmission/reception is configured/indicated, a terminal may not expect separate TRS transmission. And/or, when OT-RS transmission/reception is configured/indicated, a terminal may not expect TRS transmission related to reception of an RS such as a CSI-RS/SRS/DMRS and/or a physical channel/resource such as a PDSCH/PUSCH/PDCCH/PUCCH/PBCH/PRACH (and/or you can expect a TRS not to be sent).

As described above, because an OT-RS performs the function of a TRS instead, a TRS may not be transmitted or received.

Embodiment 2-4: When configuring/indicating/defining the 'correspondence relationship' of the Embodiment 2 (or Embodiment 2-1), a time axis (i.e., time domain) correspondence relationship and/or a frequency axis (i.e., frequency domain) correspondence relationship may be separately/independently configured/indicated/defined.

A base station/terminal may configure/indicate/define that a correspondence relationship can be configured between an OT-RS and an I-RS only in a time axis (i.e., time domain). In this case, when performing inference based on an I-RS using variables/parameters (e.g., weight, bias, etc.) of ana AI/ML algorithm and/or an NN learned based on an OT-RS, this may mean that only characteristics/variables of a time axis can be referenced (and/or an input value is configured by a time axis). For example, when learning variables of an AI/ML algorithm and/or an NN for channel estimation based on an OT-RS and applying them to an I-RS, an AI/ML algorithm and/or an NN may be performed based on time axis data of an I-RS and/or time axis characteristics/variables learned based on an OT-RS.

And/or, a base station/terminal may configure/indicate/define that a correspondence relationship can be established between an OT-RS and an I-RS only in a frequency axis (i.e., frequency domain). In this case, when performing inference based on an I-RS using variables/parameters (e.g., weight, bias, etc.) of an AI/ML algorithm and/or an NN learned based on an OT-RS, this may mean that only characteristics/variables of a frequency axis can be referenced (and/or an input value is configured by a frequency axis). For example, when learning variables of an AI/ML algorithm and/or an NN for channel estimation based on an OT-RS and applying them to an I-RS, an AI/ML algorithm and/or an NN may be performed based on frequency axis data of an I-RS and/or frequency axis characteristics/variables learned based on an OT-RS.

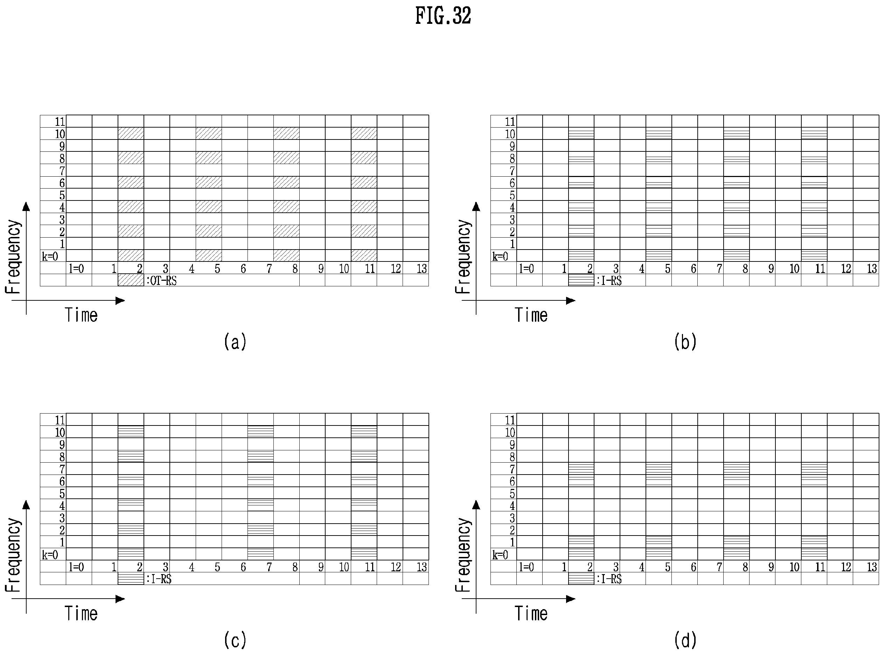

FIG. 32 illustrates a signal/channel for training and inference of an AI/ML model according to an embodiment of the present disclosure.

FIG. 32 (a) shows an example of an OT-RS, and FIG. 32(b)/FIG. 32(c)/FIG. 32(d) shows an example of an I-RS. In particular, an I-RS in FIG. 32(b) has the same RS pattern as n OT-RS in FIG. 32(a). Since an I-RS and an OT-RS have the same RS pattern, in this case, all time axis/frequency axis correspondence relationships can be configured/indicated between an OT-RS and an I-RS. In addition, when performing inference based on an I-RS, all time axis/frequency axis results (e.g., weight, bias, etc.) learned based on an OT-RS can be used.

On the other hand, in the case of an I-RS of FIG. 32(c), this example illustrates the case where an OT-RS in FIG. 32(a) has the same RS pattern on the frequency axis, however has different RS patterns on a time axis. In this case, only a frequency axis correspondence relationship between an OT-RS and an I-RS can be configured/indicated. And, when performing inference based on an I-RS, only the frequency axis results among time axis/frequency axis results (e.g., weight, bias, etc.) learned based on an OT-RS can be used.

Meanwhile, an I-RS in FIG. 32 (d) has the same RS pattern on a time axis as an OT-RS in FIG. 32(a), however has different RS patterns on a frequency axis. do. In this case, only a time axis correspondence relationship between an OT-RS and an I-RS can be configured/indicated. In addition, when performing inference based on an I-RS, only the time axis results among the time axis/frequency axis results (e.g., weight, bias, etc.) learned based on an OT-RS can be used.

In the above description, a method for configuring/indicating a time axis/frequency axis correspondence relationship is described mainly based on an RS pattern, however this is only an example. It may be considered to configure/indicate each correspondence relationship based on the time axis/frequency axis channel characteristics expected by a base station/terminal. Additionally, since this is not intended to limit the proposed method, each correspondence relationship can be configured/indicated according to the use/purpose of a base station/terminal.

In the above proposed method, a time axis correspondence relationship and/or a frequency axis correspondence relationship are mainly described, but this is not intended to limit the proposed method. Therefore, based on the proposed method, it is obvious that in addition to/instead of a time axis/frequency axis correspondence relationship, it is possible to additionally consider a method of allowing only learning information in units of specific time/frequency resource areas other than the correspondence relationship to be applied during inference. In this case, when configuring/indicating a correspondence relationship between an OT-RS and an I-RS in Embodiment 2, when performing inference based on an I-RS along with an index for identifying an OT-RS, an area/range of the referenced time/frequency resource may also be configured/indicated.

Due to differences in an RS pattern of an OT-RS and an I-RS, and/or between a timing of learning based on an OT-RS and a timing of performing inference by receiving an I-RS, etc., a situation may arise where all information learned with an OT-RS cannot be applied when performing inference with an I-RS. In this case, the utilization/efficiency of an OT-RS can be increased by allowing only learning information in specific area units (e.g., time axis/frequency axis) to be applied during inference.

Embodiment 2-4-1: For a single I-RS, a correspondence relationship with a plurality of OT-RSs can be configured/indicated/defined.

A base station/terminal can configure/indicate/define a correspondence relationship between a single I-RS and multiple OT-RSs.

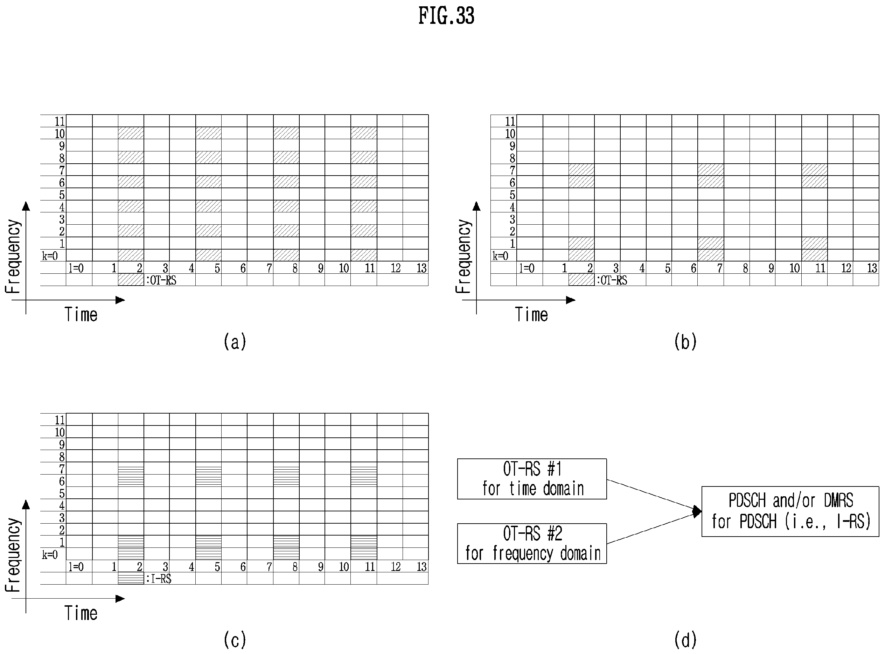

FIG. 33 illustrates a signal/channel for training and inference of an AI/ML model according to an embodiment of the present disclosure.

FIGS. 33 (a) and 33 (b) show an example of an OT-RS, and FIG. 33(c) shows an example of an I-RS. In the example of FIG. 33, a correspondence relationship with two OT-RSs of FIG. 33(a)/FIG. 33(b) may be configured/indicated for an I-RS of FIG. 33 (c) .

Here, as shown in FIG. 33(d), a correspondence relationship on a time axis can be configured/indicated for FIG. 33(a) and a correspondence relationship on a frequency axis can be configured/indicated for FIG. 33(b). In this case, when performing inference based on an I-RS, a base station/terminal can only use the time axis results among the time axis/frequency axis results (e.g., weight, bias, etc.) learned based on an OT-RS of FIG. 33(a). And/or only the frequency axis results can be used among the time axis/frequency axis results (e.g., weight, bias, etc.) learned based on an OT-RS of FIG. 33(b).

Due to differences in an RS pattern of an OT-RS and an I-RS, and/or between a timing of learning based on an OT-RS and a timing of performing inference by receiving an I-RS, etc., a situation may arise where all information learned with an OT-RS cannot be applied when performing inference with an I-RS. In this case, only learning information in specific area units (e.g., time axis/frequency axis) can be applied during inference. In addition, by configuring/indicating a correspondence relationship with multiple OT-RSs for a single I-RS, inference for a corresponding I-RS can be performed by combining learning results corresponding to a I-RS among the multiple learning results. Based on this, the utilization/efficiency of an OT-RS can be increased.

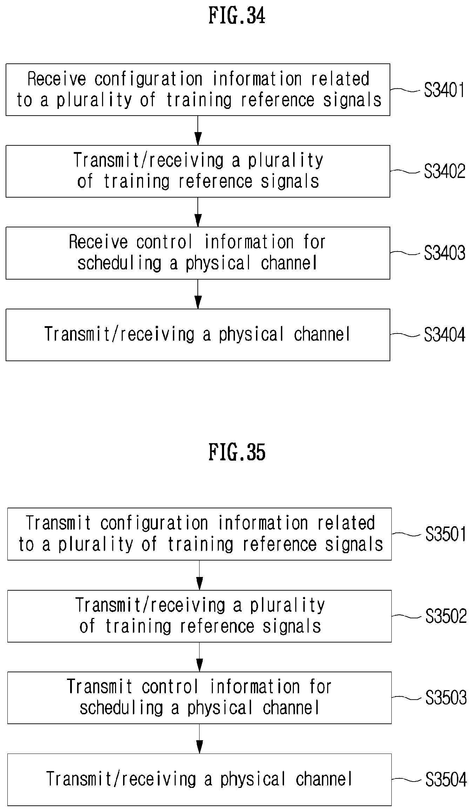

FIG. 34 is a diagram illustrating an operation of a terminal for a wireless channel transmission and reception method according to an embodiment of the present disclosure.

FIG. 34 illustrates an operation of a terminal based on the previously proposed methods (e.g., any one or a combination of more than one in Embodiment 2, Embodiment 2-1, Embodiment 2-2, Embodiment 2-4, and detailed embodiments). The example in FIG. 34 is for convenience of explanation and does not limit the scope of the present disclosure. Some step(s) illustrated in FIG. 34 may be omitted depending on the situation and/or setting. Additionally, the terminal in FIG. 34 is only an example, and may be implemented as a device illustrated in FIG. 36 below. For example, the processors 102/202 of FIG. 36 can control transmission and reception of channels/signals/data/information, etc. using the transceivers 106/206 and also control to store transmitted or received channels/signals/data/information, etc. in the memory 104/204.

Additionally, the operations of FIG. 34 may be processed by one or more processors 102, 202 of FIG. 36, and the operation of FIG. 34 may be stored in memory (e.g., one or more memories 104 and 204 of FIG. 36) in a form of instructions/programs (e.g. instructions, executable code) for driving at least one processor (e.g., 102 and 202) of FIG. 36.

Referring to FIG. 34, a terminal may receive configuration information related to a plurality of training reference signals for training of an AI/ML model from a base station (S3401).

Here, a training reference signal is not limited to only a reference signal, and may include all physical channels (e.g., PDSCH, PUSCH, PDCCH, PUCCH, PBCH, PRACH, etc.)/signals (e.g., CSI-RS, SRS, PTRS, CMRS, TRS, etc.) used for (online) training of an AI/ML model (and/or NN) as described above.

The configuration information may be configured in a format that further includes an indication that a corresponding physical channel/signal is used for training of an AI/ML model (and/or NN) in configuration information for each existing physical channel/signal, or configuration information may be configured separately by grouping only a plurality of training reference signals used for training of an AI/ML models (and/or NN), and then existing configuration information on a physical channels/signal included in the plurality of training reference signals may be referenced.

A terminal receives a plurality of training reference signals from a base station or transmits a plurality of training reference signals to a base station (S3402).

For example, as shown in FIG. 27 (a) above, when a terminal trains an AI/ML model (and/or NN) using a training reference signal and derives an inference result for the inference reference signal based on this, the terminal can receive a training reference signal from a base station. Here, a terminal can store trained results for each of a plurality of training reference signals (or for a predetermined group) and use appropriate training results for each inference reference signal.

Conversely, as shown in FIG. 27(b), when a base station trains an AI/ML model (and/or NN) using a training reference signal and derives an inference result for the inference reference signal based on this, a terminal may transmit a training reference signal to the base station. Here, a base station can store trained results for each of a plurality of training reference signals (or for a predetermined group), and can use appropriate training results for each inference reference signal.

Here, an AI/ML model (and/or NN) is trained may mean, as described above, obtaining or updating one or more parameters of the AI/ML model (and/or NN) using one or more training reference signals. Here, the one or more parameters may include weight and bias of the AL/ML model.

Additionally, inference from an AI/ML model (and/or NN) may correspond to an inference result (e.g., a channel estimate value) derived by applying the one or more parameters to the inference reference signal.

Meanwhile, in FIG. 34, for convenience of explanation, an inference reference signal is explained as an example of a DMRS for a PDSCH/PUSCH, however the present disclosure is not limited thereto, and an inference reference signal, like a training reference signal, may include all physical channels (e.g., PDSCH, PUSCH, PDCCH, PUCCH, PBCH, PRACH, etc.)/signals (e.g., CSI-RS, SRS, PTRS, CMRS, TRS, etc.) used for inference of the AI/ML model (and/or NN).

A terminal receives control information for scheduling a physical channel (e.g., PDSCH or PUSCH) from a base station (S3403).

Here, control information may correspond to downlink control information (DCI) and may be transmitted through a PDCCH. Alternatively, control information may correspond to a MAC CE, in which case it may be transmitted through a PDSCH.

A terminal transmits or receives a physical channel (i.e., receives a PDSCH or transmits a PUSCH) based on control information (S3404).

Here, when a terminal receives a PDSCH, the terminal may receive the PDSCH based on an inference derived for the DMRS of the PDSCH from an AI/ML model trained using one or more training reference signals. Here, one or more training reference signals may be identified by information on the one or more training reference signals corresponding to the DMRS included in the configuration information or the control information. In this case, although not shown in FIG. 34, a terminal may request a base station to transmit a training reference signal as shown in FIG. 27 (a).

Alternatively, when a terminal transmits a PUSCH, a base station may receive the PUSCH based on inferences derived for the DMRS of the PUSCH from an AI/ML model (and/or NN) trained using one or more training reference signals. Here, one or more training reference signals may be identified by information on the one or more training reference signals corresponding to the DMRS included in the configuration information or the control information. In this case, although not shown in FIG. 34, a base station may indicate a terminal to transmit a training reference signal to the base station, as shown in FIG. 27(b).

Here, according to the Embodiment 2-1, the information on the one or more training reference signals in the configuration information or the control information includes at least one of indexes and resources for identifying the one or more training reference signals.

Alternatively, the configuration information or the control information may include information on correspondence relationships between the plurality of training reference signals and reference signals other than the inference reference signal (e.g., DMRS). In this case, based on one or more other reference signals corresponding to the inference reference signal (e.g., DMRS) being indicated by the configuration information or the control information, the one or more training reference signals corresponding to the inference reference signal (e.g., DMRS) may be determined according to a specific correspondence relationship to the one or more other reference signals.

Alternatively, the configuration information or the control information may include information on correspondence relationships between the plurality of training reference signals and reference signals other than the inference reference signal (e.g., DMRS). In this case, based on a specific correspondence relationship to the inference reference signal (e.g., DMRS) by the configuration information or the control information, the one or more training reference signals corresponding to the inference reference signal (e.g., DMRS) may be determined according to the specific correspondence relationship.

Here, a corresponding relationship may include at least one of a CORESET (or group of CORESETs), an SS set (or group of SSR sets), a TCI state (or group of TCI states), an SRI (or group of SRIs), spatial relation information (or spatial relation information) group), a PL RS (or group of PL RSs), a BWP (or group of BWPs).

In addition, although not shown in FIG. 34, according to Embodiment 2-2, a terminal can report to a base station a number of different training reference signals that the terminal can support simultaneously.

In addition, according to the Embodiment 2-3, the configuration information or the control information includes information on the one or more training reference signals corresponding to the inference reference signal (e.g., DMRS), a TRS related to the physical channel (e.g., PDSCH, PUSCH) may not be transmitted.

Additionally, according to Embodiment 2-4, information on the one or more training reference signals may be configured separately for a time domain and a frequency domain. That is, for a specific inference reference signal, one training reference signal may correspond only to a time domain, and another training reference signal may correspond only to a frequency domain. In this case, the configuration information or the control information may include information on the one or more training reference signals for at least one of a time domain a frequency domain.

In addition, the configuration information or the control information may further include information on a specific resource region used for the inference with respect to the one or more training reference signals. In this case, a terminal/base station may derive inference from the trained AI/ML model (and/or NN) using only training reference signals (resources) included (belonging to) the specific resource region for inference.

FIG. 35 is a diagram illustrating an operation of a base station for a wireless channel transmission and reception method according to an embodiment of the present disclosure.

FIG. 35 illustrates an operation of a base station based on the previously proposed methods (e.g., any one or a combination of more than one in Embodiment 2, Embodiment 2-1, Embodiment 2-2, Embodiment 2-4, and detailed embodiments). The example in FIG. 35 is for convenience of explanation and does not limit the scope of the present disclosure. Some step(s) illustrated in FIG. 35 may be omitted depending on the situation and/or setting. Additionally, the base station in FIG. 35 is only an example, and may be implemented as a device illustrated in FIG. 36 below. For example, the processors 102/202 of FIG. 36 can control transmission and reception of channels/signals/data/information, etc. using the transceivers 106/206 and also control to store transmitted or received channels/signals/data/information, etc. in the memory 104/204.

Additionally, the operations of FIG. 35 may be processed by one or more processors 102, 202 of FIG. 36, and the operation of FIG. 35 may be stored in memory (e.g., one or more memories 104 and 204 of FIG. 36) in a form of instructions/programs (e.g. instructions, executable code) for driving at least one processor (e.g., 102 and 202) of FIG. 36.

Referring to FIG. 35, a base station may transmit configuration information related to a plurality of training reference signals for training of an AI/ML model to a terminal (S3501).

Here, a training reference signal is not limited to only a reference signal, and may include all physical channels (e.g., PDSCH, PUSCH, PDCCH, PUCCH, PBCH, PRACH, etc.)/signals (e.g., CSI-RS, SRS, PTRS, CMRS, TRS, etc.) used for (online) training of an AI/ML model (and/or NN) as described above.

The configuration information may be configured in a format that further includes an indication that a corresponding physical channel/signal is used for training of an AI/ML model (and/or NN) in configuration information for each existing physical channel/signal, or configuration information may be configured separately by grouping only a plurality of training reference signals used for training of an AI/ML models (and/or NN), and then existing configuration information on a physical channels/signal included in the plurality of training reference signals may be referenced.

A base station receives a plurality of training reference signals from a terminal or transmits a plurality of training reference signals to a terminal (S3502).

For example, as shown in FIG. 27(a) above, when a terminal trains an AI/ML model (and/or NN) using a training reference signal and derives an inference result for the inference reference signal based on this, a base station can transmit a training reference signal to the terminal. Here, a base station can store trained results for each of a plurality of training reference signals (or for a predetermined group) and use appropriate training results for each inference reference signal.

Conversely, as shown in FIG. 27 (b), when a base station trains an AI/ML model (and/or NN) using a training reference signal and derives an inference result for the inference reference signal based on this, the base station may receive a training reference signal from a terminal. Here, a terminal can store trained results for each of a plurality of training reference signals (or for a predetermined group), and can use appropriate training results for each inference reference signal.

Here, an AI/ML model (and/or NN) is trained may mean, as described above, obtaining or updating one or more parameters of the AI/ML model (and/or NN) using one or more training reference signals. Here, the one or more parameters may include weight and bias of the AL/ML model.

Additionally, inference from an AI/ML model (and/or NN) may correspond to an inference result (e.g., a channel estimate value) derived by applying the one or more parameters to the inference reference signal.

Meanwhile, in FIG. 35, for convenience of explanation, an inference reference signal is explained as an example of a DMRS for a PDSCH/PUSCH, however the present disclosure is not limited thereto, and an inference reference signal, like a training reference signal, may include all physical channels (e.g., PDSCH, PUSCH, PDCCH, PUCCH, PBCH, PRACH, etc.)/signals (e.g., CSI-RS, SRS, PTRS, CMRS, TRS, etc.) used for inference of the AI/ML model (and/or NN).

A base station transmits control information for scheduling a physical channel (e.g., PDSCH or PUSCH) to a terminal (S3503).

Here, control information may correspond to downlink control information (DCI) and may be transmitted through a PDCCH. Alternatively, control information may correspond to a MAC CE, in which case it may be transmitted through a PDSCH.

A base station transmits or receives a physical channel (i.e., transmits a PDSCH or receives a PUSCH) based on control information (S3504).

Here, when a base station transmits a PDSCH, a terminal may receive the PDSCH based on an inference derived for the DMRS of the PDSCH from an AI/ML model trained using one or more training reference signals. Here, one or more training reference signals may be identified by information on the one or more training reference signals corresponding to the DMRS included in the configuration information or the control information. In this case, although not shown in FIG. 35, a base station may receive a request to transmit a training reference signal from a terminal as shown in FIG. 27(a).

Alternatively, when a base station receives a PUSCH, a base station may receive the PUSCH based on inferences derived for the DMRS of the PUSCH from an AI/ML model (and/or NN) trained using one or more training reference signals. Here, one or more training reference signals may be identified by information on the one or more training reference signals corresponding to the DMRS included in the configuration information or the control information. In this case, although not shown in FIG. 35, a base station may indicate a terminal to transmit a training reference signal to the base station, as shown in FIG. 27(b).

Here, according to the Embodiment 2-1, the information on the one or more training reference signals in the configuration information or the control information includes at least one of indexes and resources for identifying the one or more training reference signals.

Alternatively, the configuration information or the control information may include information on correspondence relationships between the plurality of training reference signals and reference signals other than the inference reference signal (e.g., DMRS). In this case, based on one or more other reference signals corresponding to the inference reference signal (e.g., DMRS) being indicated by the configuration information or the control information, the one or more training reference signals corresponding to the inference reference signal (e.g., DMRS) may be determined according to a specific correspondence relationship to the one or more other reference signals.

Alternatively, the configuration information or the control information may include information on correspondence relationships between the plurality of training reference signals and reference signals other than the inference reference signal (e.g., DMRS). In this case, based on a specific correspondence relationship to the inference reference signal (e.g., DMRS) by the configuration information or the control information, the one or more training reference signals corresponding to the inference reference signal (e.g., DMRS) may be determined according to the specific correspondence relationship.

Here, a corresponding relationship may include at least one of a CORESET (or group of CORESETs), an SS set (or group of SSR sets), a TCI state (or group of TCI states), an SRI (or group of SRIs), spatial relation information (or spatial relation information) group), a PL RS (or group of PL RSs), a BWP (or group of BWPs).

In addition, although not shown in FIG. 35, according to Embodiment 2-2, a base station can receive a report from a terminal a number of different training reference signals that the terminal can support simultaneously.

In addition, according to the Embodiment 2-3, the configuration information or the control information includes information on the one or more training reference signals corresponding to the inference reference signal (e.g., DMRS), a TRS related to the physical channel (e.g., PDSCH, PUSCH) may not be transmitted.

Additionally, according to Embodiment 2-4, information on the one or more training reference signals may be configured separately for a time domain and a frequency domain. That is, for a specific inference reference signal, one training reference signal may correspond only to a time domain, and another training reference signal may correspond only to a frequency domain. In this case, the configuration information or the control information may include information on the one or more training reference signals for at least one of a time domain a frequency domain.

In addition, the configuration information or the control information may further include information on a specific resource region used for the inference with respect to the one or more training reference signals. In this case, a terminal/base station may derive inference from the trained AI/ML model (and/or NN) using only training reference signals (resources) included (belonging to) the specific resource region for inference.

General Device to which the Present Disclosure may be applied

FIG. 36 is a diagram which illustrates a block diagram of a wireless communication device according to an embodiment of the present disclosure.

In reference to FIG. 36, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of receiving a PDSCH (physical downlink shared channel) in a wireless communication system, the method performed by a terminal comprising:

   receiving, from a base station, configuration information related to a plurality of training reference signals for training of an artificial intelligence (AI)/machine learning (ML) model;
   receiving, from the base station, the plurality of training reference signals;
   receiving, from the base station, control information for scheduling the PDSCH; and
   receiving, from the base station, the PDSCH based on an inference derived for a demodulation reference signal (DMRS) of the PDSCH from an AI/ML model trained using one or more training reference signals among the plurality of training reference signals,
   wherein the configuration information or the control information includes information on the one or more training reference signals corresponding to the DMRS.

2. The method of claim 1, wherein one or more parameters of the AI/ML model are obtained or updated using the one or more training reference signals, and
   wherein the one or more parameters include a weight and a bias of the AL/ML model.

3. The method of claim 2, wherein the inference corresponds to a channel estimate value derived by applying the one or more parameters to the DMRS.

4. The method of claim 1, wherein the information on the one or more training reference signals includes at least one of an index and a resource for identifying the one or more training reference signals.

5. The method of claim 1, wherein the configuration information or the control information includes information on a correspondence relationship between the plurality of training reference signals and reference signals other than the DMRS, and
   wherein based on one or more other reference signals corresponding to the DMRS being indicated by the configuration information or the control information indicating, the one or more training reference signals corresponding to the DMRS are determined according to a specific correspondence relationship to the one or more other reference signals.

6. The method of claim 1, wherein the configuration information or the control information includes information on a correspondence relationship between the plurality of training reference signals and reference signals other than the DMRS, and
   wherein based on a specific correspondence relationship to the DMRS being indicated by the configuration information or the control information, the one or more training reference signals corresponding to the DMRS are determined according to the specific correspondence relationship.

7. The method of claim 6, wherein the correspondence relationship includes at least one of a control resource set (CORESET) and a search space (SS) set, a transmission configuration indication (TCI) state, a sounding reference signal resource indicator (SRI), spatial relation information, a pathloss reference signal (PL RS), a bandwidth part (BWP).

8. The method of claim 1, further comprising:
   reporting, to the base station, a number of different training reference signals that the terminal can support simultaneously.

9. The method of claim 1, wherein as the configuration information or the control information includes information on the one or more training reference signals corresponding to the DMRS, a tracking reference signal (TRS) related to the PDSCH is not transmitted.

10. The method of claim 1, wherein information on the one or more training reference signals is configured separately for a time domain and a frequency domain, and
wherein the configuration information or the control information includes information on the one or more training reference signals for at least one of a time domain and a frequency domain.

11. The method of claim 1, wherein the configuration information or the control information further includes information on a specific resource region used for the inference for the one or more training reference signals.

12. The method of claim 11, wherein the inference is derived from an AI/ML model trained using only the one or more training reference signals included in the specific resource region.

13. A terminal of receiving a PDSCH (physical downlink shared channel) in a wireless communication system, the terminal comprising:

at least one transceiver for transmitting and receiving a wireless signal; and
at least one processor for controlling the at least one transceiver,
wherein the at least one processor configured to:

receive, from a base station, configuration information related to a plurality of training reference signals for training of an artificial intelligence (AI)/machine learning (ML) model;
receive, from the base station, the plurality of training reference signals;
receive, from the base station, control information for scheduling the PDSCH; and
receive, from the base station, the PDSCH based on an inference derived for a demodulation reference signal (DMRS) of the PDSCH from an AI/ML model trained using one or more training reference signals among the plurality of training reference signals,
wherein the configuration information or the control information includes information on the one or more training reference signals corresponding to the DMRS.

14. At least one non-transitory computer-readable medium storing at least one instruction, wherein the at least one instruction executable by at least one processor controls a device of receiving a PDSCH (physical downlink shared channel) to:

receive, from a base station, configuration information related to a plurality of training reference signals for training of an artificial intelligence (AI)/machine learning (ML) model;
receive, from the base station, the plurality of training reference signals;
receive, from the base station, control information for scheduling the PDSCH; and
receive, from the base station, the PDSCH based on an inference derived for a demodulation reference signal (DMRS) of the PDSCH from an AI/ML model trained using one or more training reference signals among the plurality of training reference signals,
wherein the configuration information or the control information includes information on the one or more training reference signals corresponding to the DMRS.

15. A processing apparatus configured to control a terminal for receiving PDSCH (physical downlink control channel) in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to a plurality of training reference signals for training of an artificial intelligence (AI)/machine learning (ML) model;
receiving, from the base station, the plurality of training reference signals;
receiving, from the base station, control information for scheduling the PDSCH; and
receiving, from the base station, the PDSCH based on an inference derived for a demodulation reference signal (DMRS) of the PDSCH from an AI/ML model trained using one or more training reference signals among the plurality of training reference signals,

wherein the configuration information or the control information includes information on the one or more training reference signals corresponding to the DMRS.

16. A method of receiving a PUSCH (physical uplink shared channel) in a wireless communication system, the method performed by a base station comprising:

transmitting, to a terminal, configuration information related to a plurality of training reference signals for training of an artificial intelligence (AI)/machine learning (ML) model;
receiving, from the terminal, the plurality of training reference signals;
transmitting, to the terminal, control information for scheduling the PUSCH; and
receiving, from the terminal, the PUSCH based on an inference derived for a demodulation reference signal (DMRS) of the PUSCH from an AI/ML model trained using one or more training reference signals among the plurality of training reference signals,
wherein the configuration information or the control information includes information on the one or more training reference signals corresponding to the DMRS.

17. A base station of receiving a PUSCH (physical uplink shared channel) in a wireless communication system, the terminal comprising:

at least one transceiver for transmitting and receiving a wireless signal; and
at least one processor for controlling the at least one transceiver,
wherein the at least one processor configured to:

transmit, to a terminal, configuration information related to a plurality of training reference signals for training of an artificial intelligence (AI)/machine learning (ML) model;
receive, from the terminal, the plurality of training reference signals;
transmit, to the terminal, control information for scheduling the PUSCH; and
receive, from the terminal, the PUSCH based on an inference derived for a demodulation reference signal (DMRS) of the PUSCH from an AI/ML model trained using one or more training reference signals among the plurality of training reference signals,
wherein the configuration information or the control information includes information on the one or more training reference signals corresponding to the DMRS.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

FIG.4

# FIG.5

Resource grid

EP 4 429 179 A1

# FIG.6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

# FIG.7

Artificial Intelligence

Machine learning

Deep Learning

# FIG.8

Input layer    Hidden layer    Output layer

# FIG.9

$h_t$

A

$x_t$

$=$

$h_0$

A

$x_0$

$h_1$

A

$x_1$

$h_2$

A

$x_2$

$\cdots$

$h_t$

A

$x_t$

$\cdots$

# FIG.10

Input image
36 × 36

4 feature maps

28 × 28

Convolution
(kernel:9 × 9 × 1)

14 × 14

Max pooling

# FIG.11

W          V

$x_1$

$x_2$

$x_3$

h1

h2

$x'_1$

$x'_2$

$x'_3$

Encoder      Decoder

Loss function: $\underset{W,V}{\arg\min} \| x - g(f(x)) \|^2$ ,

where $h = f(x) = Wx, x' = g(h) = Vh$

FIG.12

Feedback

Training data

Model training

Model performance feedback

Data collection

Model deployment /update

Inference data

Model inference

Output

Actor

10

30

40

11 20 15 13 14 40 12 16

FIG.13

End device partition
(partial AI operation/model)

Network partition
(partial AI operation/model)

Actor

Intermediate data

Inference outputs

End device

Network AI end device

## FIG.14

## FIG.15

# FIG.16

UE          RAN node

1. Training data

2. Model training

3. Model deployment/update

4. Inference data

5. Model inference

6. Model performance feedback

7. Action

8. Feedback

# FIG.17

| | | |
|---|---|---|
| 23 | x23+jy23 | ⟋2005 |
| 22 | x22+jy22 | |
| 21 | ... | |
| 20 | | |
| 19 | | |
| 18 | | |
| 17 | | |
| 16 | | |
| 15 | | |
| 14 | | |
| 13 | | |
| 12 | | |
| 11 | | |
| 10 | | |
| 9 | | |
| 8 | | |
| 7 | | |
| 6 | | |
| 5 | | |
| 4 | | |
| 3 | ... | |
| 2 | x2+jy2 | |
| 1 | x1+jy1 | |
| 0 | x0+jy0 | |

Frequency

Real Value →

Input layer (2010)

x23
x22
x21
x20
x19
x18
x17
x16
x15
x14
x13
x12
x11
x10
x9
x8
x7
x6
x5
x4
x3
x2
x1
x0

CL#1    CL#N

Convolution/Hidden layer (2020)

Output layer (2030)

$\widehat{x23}$
$\widehat{x22}$
$\widehat{x21}$
...
...
$\widehat{x6}$
$\widehat{x5}$
$\widehat{x4}$
$\widehat{x3}$
$\widehat{x2}$
$\widehat{x1}$
$\widehat{x0}$

# FIG.18

Input (2110)  Feature map (2120)  Input (2110)  Feature map (2120)  Input (2110)  Feature map (2120)  Feature map (2120)  Output (2130)

Kernel/filter (2140)

Kernel/filter (2140)

Kernel/filter (2140)

Activation function (2150)

AF

S2110-a   S2110-b   S2110-c   S2120

FIG.19

EP 4 429 179 A1

Frequency

| | 0 | 0 | 2 | 3 | 4 | 5 | 6 | 7 | 8 | 9 | 10 | 11 | 12 | 13 |
|---|---|---|---|---|---|---|---|---|---|---|---|---|---|---|
| 23 | x23,0+jy23,0 | x23,1+jy23,1 | ... | | | | | | | | | ... | x23,12+jy23,12 | x23,13+jy23,13 |
| 22 | x22,0+jy22,0 | x22,1+jy22,1 | ... | | | | | | | | | ... | x22,12+jy22,12 | x22,13+jy22,13 |
| 21 | ... | ... | | | | | | | | | | | ... | ... |
| 20 | | | | | | | | | | | | | | |
| 19 | | | | | | | | | | | | | | |
| 18 | | | | | | | | | | | | | | |
| 17 | | | | | | | | | | | | | | |
| 16 | | | | | | | | | | | | | | |
| 15 | | | | | | | | | | | | | | |
| 14 | | | | | | | | | | | | | | |
| 13 | | | | | | | | | | | | | | |
| 12 | | | | | | | | | | | | | | |
| 11 | | | | | | | | | | | | | | |
| 10 | | | | | | | | | | | | | | |
| 9 | | | | | | | | | | | | | | |
| 8 | | | | | | | | | | | | | | |
| 7 | | | | | | | | | | | | | | |
| 6 | | | | | | | | | | | | | | |
| 5 | | | | | | | | | | | | | | |
| 4 | | | | | | | | | | | | | | |
| 3 | ... | ... | | | | | | | | | | | ... | ... |
| 2 | x2,0+jy2,0 | x2,1+jy2,1 | ... | | | | | | | | | | x2,12+jy2,12 | x2,13+jy2,13 |
| 1 | x1,0+jy1,0 | x1,1+jy1,1 | ... | | | | | | | | | ... | x1,12+jy1,12 | x1,13+jy1,13 |
| 0 | x0,0+jy0,0 | x0,1+jy0,1 | ... | | | | | | | | | | x0,12+jy0,12 | x0,13+jy0,13 |

Time

Real Value

Input layer (2210)

CL#N
CL#2
CL#1

Convolution/hidden layer (2220)

Output layer (2230)

# FIG.20

FIG.21

Input (2410)

Feature map
(2420)

Feature map
(2420)

Pooling (2440)

Kernel/filter
(2430)

$Max(x4, x5, x6, x7)$
$Max(x0, x1, x2, x3)$

(a)

(b)

FIG.22

BASE STATION                                                     UE

UE CAPABILITY REPORT — S005

S010 — (Pre-) DNN learning

SYSTEM INFORMATION (DNN INFORMATION) — S015

S020 — APPLYING DNN

DL CHANNEL/RS — S025

APPLYING DNN — S030

ADJUSTING DNN — S035

CSI REPORT/UL CHANNEL/RS — S040

S045 — APPLYING DNN

S050 — ADJUSTING DNN

(PARTIAL) DNN INFORMATION UPDATE — S055

APPLYING DNN — S060

# FIG.23

(a)

(b)

# FIG.24

| Base station | | Terminal | |
|---|---|---|---|
| | L1/L2 configuration → | | S105 |
| | ← T-DMRS request | | S110 |
| | T-DMRS → | | S115 |

(a)

| Base station | | Terminal | |
|---|---|---|---|
| | L1/L2 configuration → | | S205 |
| | T-DMRS indication → | | S210 |
| | ← T-DMRS | | S215 |

(b)

## FIG.25

| $l_d$ in symbols | DM-RS positions $\bar{l}$ | | | | | | | |
| --- | --- | --- | --- | --- | --- | --- | --- | --- |
| | PDSCH mapping type A | | | | PDSCH mapping type B | | | |
| | dmrs-AdditionalPosition | | | | dmrs-AdditionalPosition | | | |
| | pos0 | pos1 | pos2 | pos3 | pos0 | pos1 | pos2 | pos3 |
| 2 | – | – | – | – | $p_0\,l_0$ | $p_0\,l_0$ | $p_0\,l_0$ | $p_0\,l_0$ |
| 3 | $p_0\,l_0$ | $p_0\,l_0$ | $p_0\,l_0$ | $p_0\,l_0$ | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $p_1\,l_0,4$ | $p_1\,l_0,4$ | $p_1\,l_0,4$ |
| 6 | $l_0$ | $l_0$ | $l_0$ | $l_0$ | $l_0$ | $l_0,4$ | $l_0,4$ | $l_0,4$ |
| 7 | $l_0$ | $l_0$ | $l_0$ | $l_0$ | $l_0$ | $l_0,4$ | $l_0,4$ | $l_0,4$ |
| 8 | $l_0$ | $p_1\,l_0,7$ | $p_1\,l_0,7$ | $p_1\,l_0,7$ | $l_0$ | $p_2\,l_0,6$ | $p_2\,l_0,3,6$ | $p_2\,l_0,3,6$ |
| 9 | $l_0$ | $l_0,7$ | $l_0,7$ | $l_0,7$ | $l_0$ | $p_3\,l_0,7$ | $p_3\,l_0,4,7$ | $p_3\,l_0,4,7$ |
| 10 | $l_0$ | $p_2\,l_0,9$ | $p_2\,l_0,6,9$ | $p_2\,l_0,6,9$ | $l_0$ | $l_0,7$ | $l_0,4,7$ | $l_0,4,7$ |
| 11 | $l_0$ | $l_0,9$ | $l_0,6,9$ | $l_0,6,9$ | $l_0$ | $p_4\,l_0,8$ | $p_4\,l_0,4,8$ | $p_4\,l_0,3,6,9$ |
| 12 | $l_0$ | $l_0,9$ | $l_0,6,9$ | $l_0,5,8,11$ | $l_0$ | $l_0,9$ | $l_0,5,9$ | $l_0,3,6,9$ |
| 13 | $l_0$ | $l_0,l_1$ | $l_0,7,11$ | $l_0,5,8,11$ | $l_0$ | $l_0,9$ $p_5$ | $l_0,5,9$ $p_5$ | $l_0,3,6,9$ |
| 14 | $l_0$ | $l_0,l_1$ $p_3$ | $l_0,7,11$ $p_3$ | $l_0,5,8,11$ $p_3$ | – | – | – | – |

EP 4 429 179 A1

FIG.26

# FIG.27

Base station — Terminal | Base station — Terminal

L1/L2 configuration — S105 | L1/L2 configuration — S205

OT-RS request — S110 | OT-RS indication — S210

OT-RS transmission — S115 | OT-RS transmission — S215

PDSCH configuration /scheduling — S120 | PDSCH configuration /scheduling — S220

PDSCH transmission — S125 | PDSCH transmission — S225

(a) | (b)

# FIG.28

OT-RS #1

OT-RS #2
⋮

By DCI/MAC CE/RRC

PDSCH and/or DMRS for PDSCH (i.e., I-RS)

(a)

OT-RS #1

OT-RS #2
⋮

By DCI/MAC CE/RRC

PDSCH and/or DMRS for PDSCH (i.e., I-RS)

(b)

## FIG.29

(a)

TRS #1 → By DCI/MAC CE/RRC → OT-RS #1 → By DCI/MAC CE/RRC → PDSCH and/or DMRS for PDSCH (i.e., I-RS)

TRS #2 → By DCI/MAC CE/RRC → OT-RS #2

(b)

TRS #1 → By DCI/MAC CE/RRC → OT-RS #1

TRS #2 → By DCI/MAC CE/RRC → OT-RS #2 → By DCI/MAC CE/RRC → PDSCH and/or DMRS for PDSCH (i.e., I-RS)

EP 4 429 179 A1

# FIG.30

**(a)**

By DCI/MAC CE/RRC → PDSCH and/or DMRS for PDSCH (i.e., I-RS)

TRS #1 — By DCI/MAC CE/RRC → OT-RS #1 — Implicit indication → PDSCH and/or DMRS for PDSCH (i.e., I-RS)

TRS #2 — By DCI/MAC CE/RRC → OT-RS #2

**(b)**

By DCI/MAC CE/RRC → PDSCH and/or DMRS for PDSCH (i.e., I-RS)

TRS #1 — By DCI/MAC CE/RRC → OT-RS #1

TRS #2 — By DCI/MAC CE/RRC → OT-RS #2 — Implicit indication → PDSCH and/or DMRS for PDSCH (i.e., I-RS)

FIG.31

(a)

OT-RS →[QCL Type:TypeE]→ TCI state #1 →[By DCI/MAC CE/RRC]→ PDSCH and/or DMRS for PDSCH (i.e., I-RS)

OT-RS →[QCL Type:TypeE]→ TCI state #2

(b)

OT-RS →[QCL Type:TypeE]→ TCI state #1

PDSCH and/or DMRS for PDSCH (i.e., I-RS)

OT-RS →[QCL Type:TypeE]→ TCI state #2 →[By DCI/MAC CE/RRC]→

FIG.32

# FIG.33

(a)

(b)

(c)

(d)

## FIG.34

| Receive configuration information related to a plurality of training reference signals | ~ S3401 |

↓

| Transmit/receiving a plurality of training reference signals | ~ S3402 |

↓

| Receive control information for scheduling a physical channel | ~ S3403 |

↓

| Transmit/receiving a physical channel | ~ S3404 |

## FIG.35

| Transmit configuration information related to a plurality of training reference signals | ~ S3501 |

↓

| Transmit/receiving a plurality of training reference signals | ~ S3502 |

↓

| Transmit control information for scheduling a physical channel | ~ S3503 |

↓

| Transmit/receiving a physical channel | ~ S3504 |

FIG.36

## INTERNATIONAL SEARCH REPORT

| | International application No. |
|---|---|
| | **PCT/KR2022/017093** |

| A. | CLASSIFICATION OF SUBJECT MATTER |
|---|---|

**H04L 25/02**(2006.01)i; **H04L 5/00**(2006.01)i; **H04L 1/00**(2006.01)i

According to International Patent Classification (IPC) or to both national classification and IPC

| B. | FIELDS SEARCHED |
|---|---|

Minimum documentation searched (classification system followed by classification symbols)

H04L 25/02(2006.01); H04L 1/18(2006.01); H04L 5/00(2006.01); H04W 16/28(2009.01); H04W 24/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDSCH(physical downlink shared channel), AI(artificial intelligence), ML(machine learning), 훈련(training), 훈련 참조 신호(training reference signal), DMRS(demodulation reference signal), 추론(inference)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | HUAWEI et al. Views on studies on AI/ML for PHY. RWS-210448, 3GPP TSG RAN Rel-18 workshop, Electronic Meeting. 07 June 2021.<br>See sections 2-4.3; and figures 1(b), 2, 3 and 4(b). | 1-4,10-17<br>5-9 |
| Y | WO 2020-235884 A1 (SAMSUNG ELECTRONICS CO., LTD.) 26 November 2020 (2020-11-26)<br>See claims 1 and 12. | 1-4,10-17 |
| Y | OPPO. Discussion on R18 study on AI/ML-based 5G enhancements. RP-211809, 3GPP TSG RAN Meeting #93-e, Electronic Meeting. 06 September 2021.<br>See sections 4.1-4.2; and Appendix C. | 10 |
| A | KR 10-2020-0086340 A (ZTE CORPORATION) 16 July 2020 (2020-07-16)<br>See claims 1-49. | 1-17 |
| A | WO 2018-016904 A1 (SAMSUNG ELECTRONICS CO., LTD.) 25 January 2018 (2018-01-25)<br>See paragraphs [0006]-[0007]; and claims 1-11. | 1-17 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 February 2023** | **10 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | | International application No. |
|---|---|---|---|---|
| Information on patent family members | | | | PCT/KR2022/017093 |

| Patent document cited in search report | | | Publication date (day/month/year) | Patent family member(s) | | | Publication date (day/month/year) |
|---|---|---|---|---|---|---|---|
| WO | 2020-235884 | A1 | 26 November 2020 | CN | 111953461 | A | 17 November 2020 |
| | | | | CN | 111954303 | A | 17 November 2020 |
| | | | | CN | 111954307 | A | 17 November 2020 |
| | | | | EP | 3949243 | A1 | 09 February 2022 |
| | | | | KR | 10-2021-0156837 | A | 27 December 2021 |
| | | | | US | 2022-0217756 | A1 | 07 July 2022 |
| KR | 10-2020-0086340 | A | 16 July 2020 | CN | 108092754 | A | 29 May 2018 |
| | | | | CN | 108092754 | B | 26 October 2021 |
| | | | | CN | 113922938 | A | 11 January 2022 |
| | | | | EP | 3713130 | A1 | 23 September 2020 |
| | | | | EP | 3713130 | B1 | 12 October 2022 |
| | | | | JP | 2021-503836 | A | 12 February 2021 |
| | | | | JP | 2022-163064 | A | 25 October 2022 |
| | | | | JP | 7167150 | B2 | 08 November 2022 |
| | | | | KR | 10-2022-0127946 | A | 20 September 2022 |
| | | | | US | 11356222 | B2 | 07 June 2022 |
| | | | | US | 2020-0280416 | A1 | 03 September 2020 |
| | | | | US | 2022-0376867 | A1 | 24 November 2022 |
| | | | | WO | 2019-096292 | A1 | 23 May 2019 |
| WO | 2018-016904 | A1 | 25 January 2018 | CN | 109478979 | A | 15 March 2019 |
| | | | | CN | 109478979 | B | 15 July 2022 |
| | | | | CN | 115134062 | A | 30 September 2022 |
| | | | | EP | 3474479 | A1 | 24 April 2019 |
| | | | | KR | 10-2018-0010949 | A | 31 January 2018 |
| | | | | KR | 10-2018-0010964 | A | 31 January 2018 |
| | | | | KR | 10-2018-0011022 | A | 31 January 2018 |
| | | | | KR | 10-2022-0066238 | A | 24 May 2022 |
| | | | | KR | 10-2399616 | B1 | 17 May 2022 |
| | | | | US | 10834718 | B2 | 10 November 2020 |
| | | | | US | 11523383 | B2 | 06 December 2022 |
| | | | | US | 2019-0342865 | A1 | 07 November 2019 |
| | | | | US | 2021-0045101 | A1 | 11 February 2021 |

Form PCT/ISA/210 (patent family annex) (July 2022)